Europäisches Patentamt

European Patent Office

Office européen des brevets

(19)

(11) Publication number: **0 086 634**
**B1**

(12) # EUROPEAN PATENT SPECIFICATION

(45) Date of publication of patent specification: **28.01.87**

(51) Int. Cl.⁴: **H 04 Q 11/04**

(21) Application number: **83300682.8**

(22) Date of filing: **10.02.83**

(54) Memory circuitry for use in a digital time division switching system.

(30) Priority: **10.02.82 JP 20043/82**

(43) Date of publication of application:
**24.08.83 Bulletin 83/34**

(45) Publication of the grant of the patent:
**28.01.87 Bulletin 87/05**

(84) Designated Contracting States:
**DE FR GB SE**

(56) References cited:
FR-A-2 341 999
FR-A-2 507 372
US-A-3 956 593
US-A-4 160 127

REVIEW OF ELECTRICAL COMMUNICATION
LABORATORIES, vol. 27, nos 9-10, September-
October 1979, pages 758-772, Tokyo, JP., K.
TAWARA et al.: "A time division switching
network based on time switches"

(73) Proprietor: **Nippon Telegraph and Telephone
Corporation**
**1-6 Uchisaiwaicho 1-chome Chiyoda-ku
Tokyo (JP)**

(73) Proprietor: **FUJITSU LIMITED**
**1015, Kamikodanaka Nakahara-ku
Kawasaki-shi Kanagawa 211 (JP)**

(72) Inventor: **Sampei, Takeshi**
**3529 Kamitsuruma
Sagamihara-shi Kanagawa 228 (JP)**
Inventor: **Miyahara, Norio**
**1449-3, Sakuragaoka 1-chome
Higashiyamato-shi Tokyo 189 (JP)**
Inventor: **Nikaido, Tadanobu**
**1-2, Higashishinkoiwa 7-chome
Katsushika-ku Tokyo 124 (JP)**
Inventor: **Sato, Hiroaki**
**23-11-1105, Nishigotanda 7-chome
Shinagawa-ku Tokyo 141 (JP)**
Inventor: **Aoyama, Keizo**
**11-28, Tsukimino 1-chome
Yamato-shi Kanagawa 242 (JP)**

**0 086 634**

(56) References cited:

**IEEE INTERNATIONAL SOLID STATE CIRCUITS CONFERENCE, vol. 25, February 1982, pages 214-215, New York, USA, T. NIKAIDO et al.: "A LSI time switch for digital telephone switching"**

(74) Representative: **Fane, Christopher Robin King et al**
**HASELTINE LAKE & CO. Hazlitt House 28 Southampton Buildings Chancery Lane London, WC2A 1AT (GB)**

## Description

The present invention relates to memory circuitry for use in a digital time-division switching system, for example to memory portions of time switches and space switches in three-stage (Time-Space-Time) time-division switching systems.

Prior digital time-division switching systems are known which broadly use Time-Space-Time switches, i.e. primary time switches, a space switch, and secondary time switches. In one such switching system each of the primary time switches comprises a primary speech path memory, a hold memory, and a time slot counter. In this case, speech signals, each carrying parallel 8 bits, are written into the primary speech path memory upon the receipt of addresses read out of the hold memory and are read from the primary speech path memory into the space switch upon the receipt of addresses generated by the time slot counter. That is, the primary speech path memory adopts a random write operation and a sequential read operation. Similarly, each of the secondary time switches comprises a secondary speech path memory, a hold memory, and a time slot counter. In this case, the speech signals transmitted from the space switch are written into the secondary speech path memory upon the receipt of addresses generated by the time slot counter and are read from the secondary speech path memory upon the receipt of addresses read out of the hold memory. That is, the secondary speech path memory adopts a sequential write operation and a·random read operation.

On the other hand, the space switch, which is interposed·between the primary time switches and the secondary time switches, comprises gate switches for connecting one of the primary time switches to one of the secondary time switches and further comprises hold memories for controlling the gate switches.

In the above-mentioned prior art, however, although circuits such as the speech memories and the hold memories have a similar configuration, each circuit is constructed by combining general-purpose memory unit elements and general-purpose logic integrated circuits.

It is desirable to provide a circuitry module which can be used to construct a digital time-division switching system which is easier to design and manufacture, thereby reducing the cost thereof. FR—A—2341999 discloses a single module which includes both a speech memory and a hold memory but this prior art document does not suggest a single module which can be used selectively either as a speech path memory or as a hold memory in time switching or space switching stages.

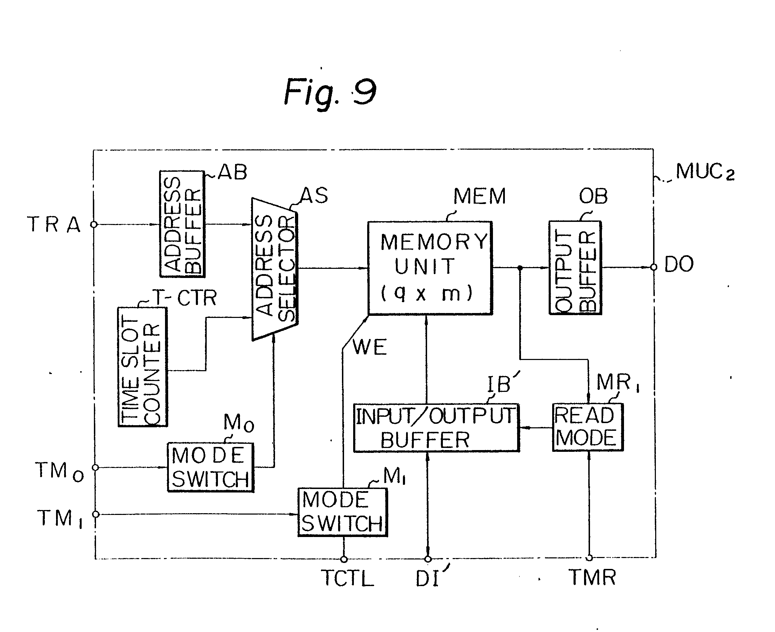

A circuitry module for use as a time switch in a digital time-division switching system and having a memory unit, an address selector, address input means, a counter, address selection mode switching means and write enable switching means is disclosed in Review of Electrical Communication Laboratories, Vol. 27, Nos. 9—10, 1979, pages 758—772 (in particular, Fig. 9). However, such modules cannot be used to construct both speech memories and hold memories.

According to the present invention, there is provided a circuitry module, for use in a digital time-division switching system, comprising;

a memory unit;

an address selector connected to the memory unit for transmitting address signals thereto;

address input means whereby externally supplied first address signals can be passed to the address selector;

a counter, connected to the address selector, for generating second address signals;

address selection mode switching means, selectively switchable by an externally applied first setting signal, for causing said address selector to transmit either said first address signals or said second address signals in dependence upon whether or not a write enable signal is applied to the memory unit;

write enable switching means connected to the memory unit, for applying write enable signals thereto;

data input means for transmitting externally supplied data to said memory unit; and

data output means for delivering data from the said memory unit to an external circuit; characterised in that the said write enable switching means are selectively switchable by an externally applied second setting signal into either a first mode, in which a write enable signal is applied to the memory unit in a write cycle of the module when a predetermined control signal is applied to an external control input of the write enable switching means, or a second mode in which a write enable signal is applied to the memory unit in a write cycle irrespective of whether such control signal is applied to the external control input, the write enable switching means having a further input for receiving a write/read cycle defining signal when the module is in use.

In a system employing embodiments of the present invention, the speech memories and the hold memories are constructed by connecting together respective identical circuitry modules. A suitable circuitry module can be constructed as a one-chip large-scale integrated (LSI) semiconductor device, thereby enabling the size of each memory to be reduced and, accordingly, enabling the size of the entire system to be reduced.

Reference will now be made, by way of example, to the accompanying drawings, wherein:

Fig. 1 is a block diagram of a digital time-division switching system in which embodiments of the present invention can be employed;

Fig. 2 is a block diagram of a prior primary time switch;

Fig. 3 is a block diagram of a prior secondary time switch;

Fig. 4 is a block diagram of a prior space switch;

Fig. 5 is a block diagram of a first embodiment of the present invention, being a circuitry module for use in time switches and hold memories;

Fig. 6 is a block diagram of a primary time switch utilizing the circuitry of Fig. 5;

Fig. 7 is a block diagram of a secondary time switch utilizing the circuitry of Fig. 5;

Fig. 8 is a block diagram of a space switch utilizing the circuitry of Fig. 5;

Figs. 9, 10, and 11 are respective block diagrams of second, third, and fourth embodiments of the present invention;

Fig. 12 is a block diagram of a primary time switch utilizing the module of Fig. 11;

Fig. 13 is a block diagram of a secondary time switch utilizing the module of Fig. 11; and

Fig. 14 is a block diagram illustrating a space switch utilizing the module of Fig. 11.

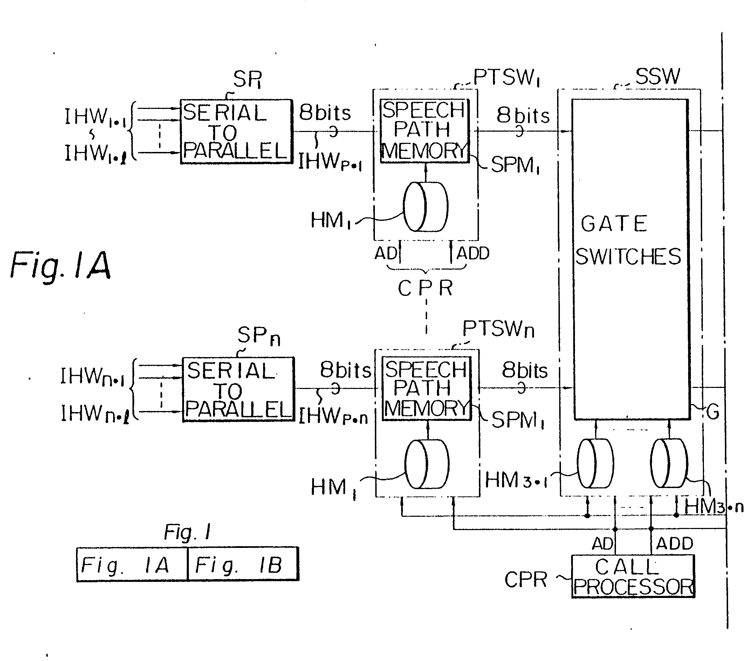

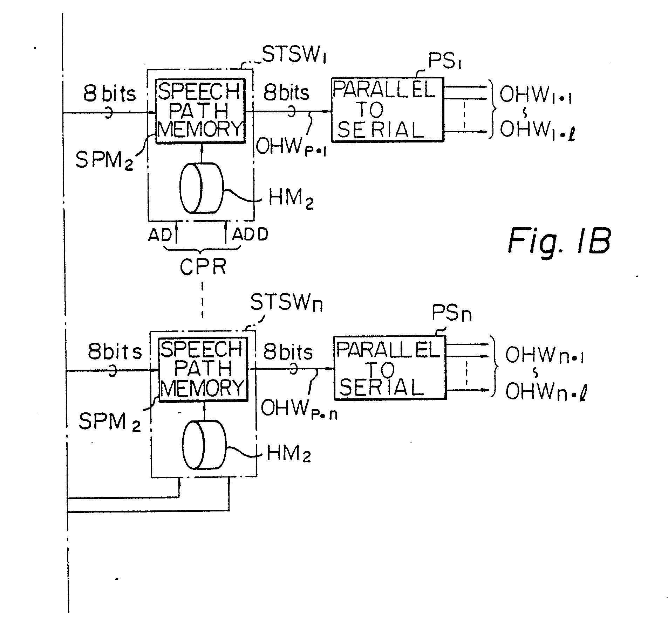

In Fig. 1, which illustrates a general digital time-division switching system, $IHW_{1.1}$ through $IHW_{1.l}$, - - -, $IHW_{n.1}$ through $IHW_{n.l}$ designate input highways, $SP_1$ through $SP_n$ designate serial-to-parallel conversion circuits, $PTSW_1$ through $PTSW_n$ designate primary time switches, SSW designates a space switch, $STSW_1$ through $STSW_n$ designate secondary time switches, $PS_1$ through $PS_n$ designate parallel-to-serial conversion circuits, $OHW_{1.1}$ through $OHW_{1.n}$, - - -, $OHW_{n.1}$ through $OHW_{n.l}$ designate output highways, and CPR designates a call processor for controlling the entire system.

Speech signals, each of which is comprised of serial 8 bits per time slot, are transported over the input highways $IHW_{1.1}$ through $IHW_{1.n}$. Such serial 8-bit signals are converted by the serial-to-parallel conversion circuit $SP_1$ into parallel 8-bit signals. As a result, each speech signal which is transported over the eight parallel highways $IHW_{p.1}$ on the output side of the serial-to-parallel conversion circuit $SP_1$ is comprised of one bit per time slot. In other words, if the multiplicity of each of the input highways $IHW_{1.1}$ through $IHW_{1.n}$ is m/l, the multiplicity of each of the parallel highways $IHW_{p.1}$ is m.

The speech signals transported over the parallel highways $IHW_{p.1}$ through $IHW_{p.n}$ are transmitted to the primary time switches $PTSW_1$ through $PTSW_n$ so that the time slots of the speech signals are changed by the primary time switches $PTSW_1$ through $PTSW_n$. Switching between the highways is performed by the space switch SSW. The speech signals are next transmitted to the secondary time switches $STSW_1$ through $STSW_n$ and then are converted by the parallel-to-serial conversion circuits $PS_1$ through $PS_n$ into serial 8-bits per time slot. Thus, a speech signal transported over one of the input highways $IHW_{1.1}$ through $IHW_{1.l}$, - - -, $IHW_{n.1}$ through $IHW_{n.l}$ is transmitted to a predetermined time slot of a predetermined one of the output highways $OHW_{1.1}$ through $OHW_{1.l}$, - - -, $OHW_{n.1}$ through $OHW_n$ so as to complete a switching operation. The digital time-division switching system, illustrated in Fig. 1, is called a three-stage Time-Space-Time (TST) configuration, a term which is broadly used.

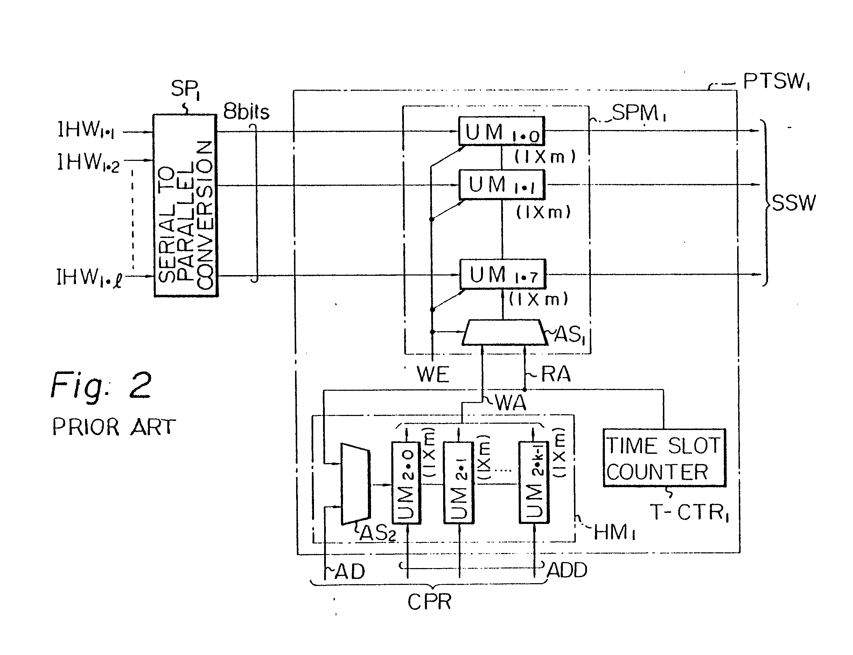

A primary time switch such as $PTSW_1$ comprises a primary speech path memory $SPM_1$ and a hold memory $HM_1$. A speech signal is written from the serial-to-parallel conversion circuit $SP_1$ into the primary speech path memory $SPM_1$ at every time slot by using an arbitrary address read out of the hold memory $HM_1$, and the written signal is read out upon the receipt of an address generated by a cyclic counter, i.e., a time slot counter, which is not shown in Fig. 1 but is shown in Fig. 2, thereby performing the conversion of a time slot containing a speech signal.

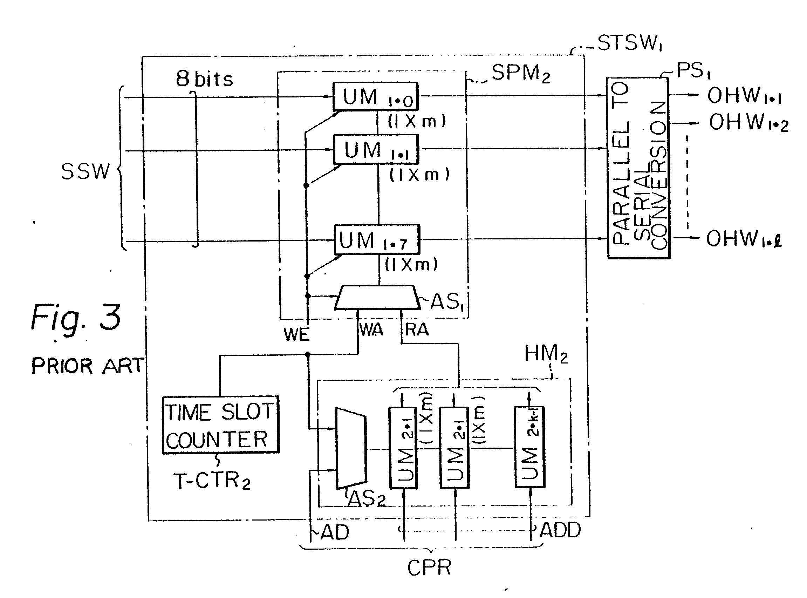

Similarly, a secondary time switch such as $STSW_1$ comprises a secondary speech path memory $SPM_2$ and a hold memory $HM_2$. In the TST configuration of Fig. 1, the secondary time switches $STSW_1$ through $STSW_n$ operate in the same manner as the primary time switches $PTSW_1$ through $PTSW_n$. That is, a speech signal is written from the space switch SSW into the secondary speech path memory $SPM_2$ at every time slot upon the receipt of an address generated by a time slot counter, which is not shown in Fig. 1 but is shown in Fig. 3, and the written signal is read out upon the receipt of an address read out of the hold memory $HM_2$, thereby performing the conversion of a time slot containing a speech signal.

Thus, the primary time switches $PTSW_1$ through $PTSW_n$ perform random write operations and sequential read operations while the secondary time switches $STSW_1$ through $STSW_n$ perform sequential write operations and random read operations.

The space switch SSW comprises a gate portion G including gate switches for connecting a primary speech path memory $SPM_1$ of a primary time switch such as $PTSW_1$ to a secondary speech path memory $SPM_2$ of a secondary time switch such as $STSW_1$. The space switch SSW further comprises speech path hold memories $HM_{3.1}$ through $HM_{3.n}$ for controlling the gate switches of the gate portion G. That is, in a particular time slot of the primary speech path memory $SPM_1$, the hold memories $HM_{3.1}$ through $MH_{3.n}$ generate signals, each of which indicate a gate switch to be turned on. When the indicated gate switch is turned on, a speech signal in the time slot of the speech path memory $SPM_1$ of a primary time switch such as $PTSW_1$ is transmitted via the turned-on gate switch to the secondary speech path memory $SPM_2$ of a secondary time switch such as $STSW_1$.

A primary time switch such as $PTSW_1$ is now explained in more detail with reference to Fig. 2. In Fig. 2, $T\text{-}CTR_1$ designates a time slot counter. If it is assumed that the multiplicity (the number of time slots in a frame) of each of the input highways $IHW_{1.1}$ through $IHW_{1.l}$ is m/l, then the

multiplicity of each of the parallel highways $IHW_{1 \cdot p}$ is m. For example, m=1024.

Parallel 8 bits per each time slot, transported over the eight parallel highways $IHW_{p \cdot 1}$, are transmitted at 1 bit per one time slot to the primary speech path memory $SPM_1$.

The primary speech path memory $SPM_1$ comprises eight unit memories $UM_{1 \cdot 0}$ through $UM_{1 \cdot 7}$ of 1×m bits. The time slot counter $T\text{-}CTR_1$, which is constructed with an m-ary counter (capable of counting up to m), generates address information which is increased by 1 at every time slot. In this case, such address information is comprised of at least k bits, where $k=\log_2 m=\log_2 1024=10$. On the other hand, the hold memory $HM_1$ also comprises k unit memories $UM_{2 \cdot 0}, \text{- - -},$ $UM_{2 \cdot k-1}$ of 1×m bits for generating m different pieces of address information.

In a write cycle for writing parallel 8-bit data into a time slot of the primary speech path memory $SPM_1$, a write enable signal WE, which is generated by the call processor CPR, is "1". In this case, an address selector $AS_1$ selects the output of the hold memory $HM_1$ while an address selector $AS_2$ selects the output of the time slot counter $T\text{-}CTR_1$.

In the above-mentioned write cycle, the time slot counter $T\text{-}CTR_1$ generates address information corresponding to the above time slot and transmits it via the address selector $AS_2$ to the unit memories $UM_{2 \cdot 0}$ through $UM_{2 \cdot k-1}$. As a result, each of the unit memories $UM_{2 \cdot 0}$ through $UM_{2 \cdot k-1}$ generates address information as a write address WA and transmits it to the primary speech path memory $SPM_1$. That is, the write address WA is supplied via the address selector $AS_1$ to each of the unit memories $UM_{1 \cdot 0}$ through $UM_{1 \cdot 7}$ so that the parallel 8 bit data on the parallel highways $IHW_{p \cdot 1}$ is written into an area of the unit memories $UM_{1 \cdot 0}$ through $UM_{1 \cdot 7}$ indicated by the write address WA.

In a read cycle for reading parallel 8-bit data out of the primary speech path memory $SPM_1$, the write enable signal WE is "0". In this case, the address selector $AS_1$ selects the output of the time slot counter $T\text{-}CTR_1$. Therefore, the time slot counter $T\text{-}CTR_1$ generates address information as a read address RA corresponding to the above parallel 8-bit data and transmits it via the address selector $AS_1$ to the unit memories $UM_{1 \cdot 0}$ through $UM_{1 \cdot 7}$ so that the above parallel 8-bit data is read from the unit memories $UM_{1 \cdot 0}$ through $UM_{1 \cdot 7}$, indicated by the read address RA, into the space switch SSW.

Thus, in the primary time switch $PTSW_1$, a speech signal from the serial-to-parallel conversion circuit $SP_1$ is randomly written into the unit memories $UM_{1 \cdot 0}$ through $UM_{1 \cdot 7}$ of the primary speech path memory $SPM_1$ indicated by the write address WA from the hold memory $HM_1$ while the written speech signal is sequentially read out of the unit memories $UM_{1 \cdot 0}$ through $UM_{1 \cdot 7}$ of the primary speech path memory $SPM_1$ indicated by the read address RA from the time slot counter $T\text{-}CTR_1$.

When a new speech path is provided, the address selector $AS_2$ selects address information AD from the call processor CPR, which, in this case, generates write address information ADD. As a result, the write address information ADD is written into the unit memories $UM_{2 \cdot 0}$ through $UM_{2 \cdot k-1}$ indicated by the address information AD.

A secondary time switch such as $STSW_1$ is now explained with reference to Fig. 3. The configuration of the secondary time switch $STSW_1$ of Fig. 3 is identical to the configuration of the primary time switch $PTSW_1$ of Fig. 2 except that the location of the two inputs of the address selector $AS_1$ is different. That is, in Fig. 3, the address selector $AS_1$ selects the output of a time slot counter $T\text{-}CTR_2$ as a write address WA in a write cycle and selects the output of the hold memory $HM_2$ as a read address RA in a read cycle. Therefore, the primary time switch $PTSW_1$ performs random write operations and sequential read operations and the secondary time switch $STSW_1$ performs sequential write operations and random read operations.

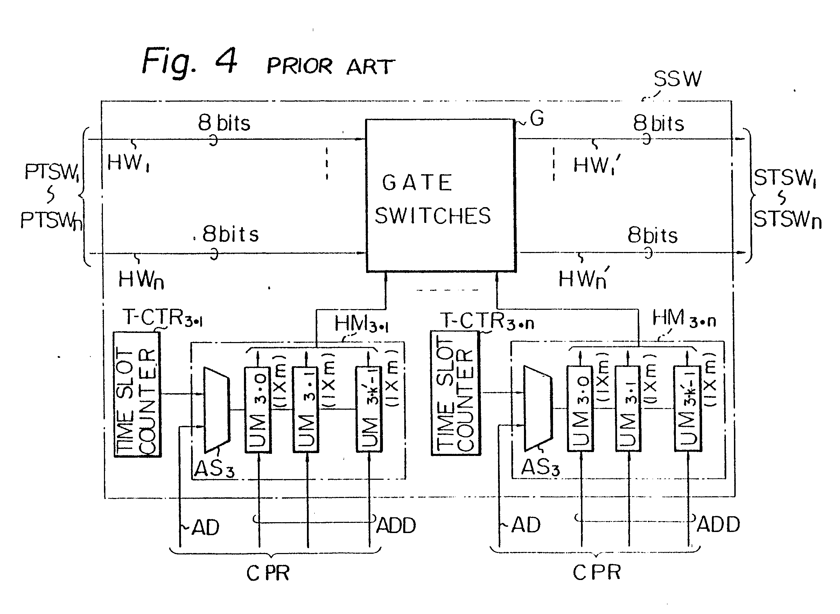

The speech path hold memories $HM_{3 \cdot 1}$ through $HM_{3 \cdot n}$ of the space switch SSW have the same configuration as the hold memories $HM_1$ and $MH_2$ of the primary time switch $PTSW_1$ and the secondary time switch $STSW_2$. The speech path hold memories $HM_{3 \cdot 1}$ through $HM_{3 \cdot n}$ are now explained with reference to Fig. 4. The hold memories $HM_{3 \cdot 1}$ through $HM_{3 \cdot n}$ are provided either for the respective highways $HW_1$ through $HW_n$ or for the respective highways $HW_1'$ through $HW_n'$. The operation of a hold memory such as $HM_{3 \cdot 1}$ is as follows. In a time slot, unit memories $UM_{3 \cdot 0}$ through $UM_{3 \cdot k-1}$ of the hold memory $HM_{3 \cdot 1}$ generate address information indicated by a time slot counter $T\text{-}CTR_{3 \cdot 1}$, which is constructed with an m-ary counter. Such address information is transmitted to the gate portion G so as to indicate the turning on of a gate switch for connecting the highway $HW_1$ to one of the highways $HW_1'$ through $HW_n'$. As a result, in the above time slot, a speech signal is transmitted from the highway $HW_1$ via the turning-on gate switch of the gate portion G to a selected highway, such as $HW_1'$.

Note that the output of the time slot counter $T\text{-}CTR_{3 \cdot 1}$ is used only within the hold memory $HM_{3 \cdot 1}$. In addition, the number k' of unit memories such as $UM_{3 \cdot 0}$ through $UM_{3 \cdot k'-1}$ of 1×m bits per each hold memory is at least $\log_2 n$, where n is the number of highways $HW_1$ through $HW_n$, i.e., the number of primary time switches. Further, an address selector $AS_3$ selects the output of a time slot counter such as $T\text{-}CTR_{3 \cdot 1}$ in a read cycle while it selects the output, i.e., address information AD, of the call processor CPR in a write cycle.

As is mentioned above, in the digital time-division switching system of Fig. 1, a large number of memory unit elements are used in the time switches and the space switch. In the prior art, the memory unit elements are constructed by combining general-purpose memory circuits and general-purpose logic circuits. Due to this combination, various kinds of memory circuits and logic circuits must be designed for respective memory unit elements, thereby complicating the design and manufacture of a digital time-division switching system and increasing the cost thereof.

As is mentioned above with reference to Figs. 2, 3, and 4, the speech path memories $SPM_1$ and $SPM_2$ and the hold memories $HM_1$, $HM_2$, and $HM_{3.1}$ through $HM_{3.n}$ are constructed commonly with unit memories of $1 \times m$ bits and an address selector. However, the selecting operation of each address selector and the required capacity of each memory unit comprised of unit memories are different for each of the above-mentioned memories.

In an embodiment of the invention a memory circuit is provided incorporating mode switch circuits for controlling the selecting operation of an address selector and other functions from the exterior. Accordingly, such a memory circuit can be adapted for various kinds of memories, such as $SPM_1$, $SPM_2$, $HM_1$, $HM_2$, and $MH_{1.1}$ through $HM_{1.n}$. The difference in the required capacity between the memories can be compensated for by providing a memory circuit having a maximum capacity. The provision of such a memory circuit may result in redundancy, but the redundancy can be reduced by selecting the configuration of the digital time-division switching system.

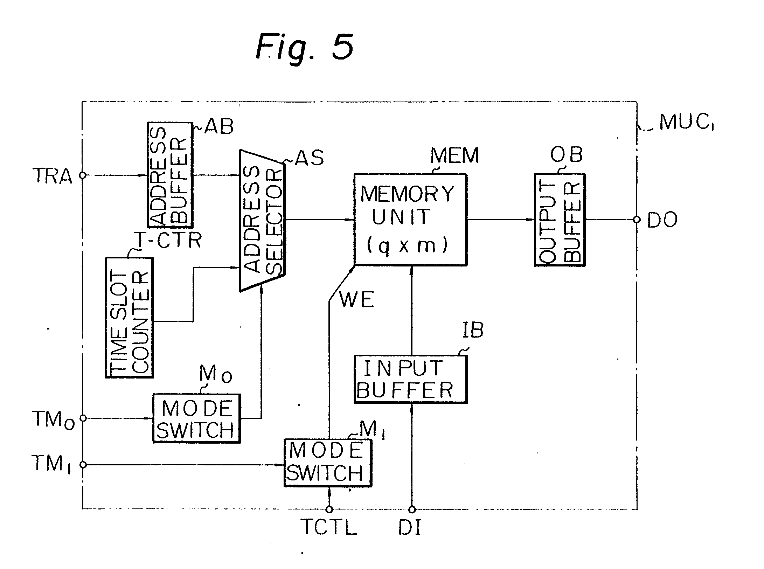

In Fig. 5, which illustrates a first embodiment of the present invention, address input means comprise an address buffer AB for receiving an address from a terminal TRA, T-CTR designates a time slot counter, i.e. an m-ary counter, AS designates an address selector for selecting one of the outputs of the address buffer AB and the time slot counter T-CTR, MEM designates a memory unit of $q$ words $\times m$ bits, data input means comprise an input data buffer IB connected to a terminal DI, data output means comprise an output data buffer OB connected to a terminal DO, address selection mode switching means comprise an address selection mode switch circuit $M_0$ connected to a terminal $TM_0$ and to the address selector AS, and write enable switching means comprise a write mode switch circuit $M_1$ connected to terminals $TM_1$ and TCTL and to the memory unit MEM. Note that although each of the terminals TRA, $DI_1$ and DO is illustrated in Fig. 5 by a single terminal, each of the terminals is actually a plurality of terminals constructed for a plurality of parallel data.

Since the memory unit MEM must have a maximum capacity for each memory, $q$ must be larger than $\log_2 m$ and $\log_2 n$, and, furthermore, any unit memories of each speech path memory or hold memory can be constructed with the memory unit MEM.

A data signal is transmitted from the terminal DI via the input data buffer IB to the memory unit MEM, and an address signal is transmitted from the address selector AS to the memory unit MEM. In a write cycle for a time slot in which the write enable signal WE is "1", the transmitted data signal is written into the memory unit MEM indicated by the address signal transmitted from the address selector AS.

The address selector AS can receive two kinds of address signals, i.e., an internal address signal from the time slot counter T-CTR for performing a count-up operation in synchronization with the time slots and an external address signal from the address buffer AB. The selecting operation mode of the address selector AS is controlled by the address selection mode switch circuit $M_0$.

The address selection mode switch circuit $M_0$ is now explained. If the data "0" is applied to the terminal $TM_0$, the circuit $M_0$ transmits a first control signal to the address selector AS. As a result, the address selector AS selects an external address signal, i.e., the output of the address buffer AB in a write cycle, and selects an internal address signal, i.e., the output of the time slot counter T-CTR in a read cycle. Contrary to this, if the data "1" is applied to the terminal $TM_0$, the circuit $M_0$ transmits a second control signal to the address selector AS. As a result, the address selector AS selects an internal address signal, i.e., the output of the time slot counter T-CTR in a write cycle, and selects an external address signal, i.e., the output of the address buffer AB in a read cycle. That is, since the address selection mode switch circuit $M_0$ also receives a write/read cycle control signal (not shown) from a control circuit, for example, from the call processor CPR of Fig. 1, the circuit $M_0$ transmits the read/write cycle control signal as the first control signal to the address selector AS when the data "0" is applied to the terminal $TM_0$ and transmits the inverted signal of the read/write cycle control signal as the second control signal to the address selector AS when the data "1" is applied to the terminal $TM_0$.

Note that the address selector AS can be constructed with two kinds of analog switches controlled by the output of the address selection mode switch circuit $M_0$. In this case, the two kinds of analog switches operate in an opposite manner.

The write mode switch circuit $M_1$ is now explained. If the data "0" is applied to the terminal $TM_1$, the circuit $M_1$ generates the write enable signal WE ($=$"1") in a write cycle regardless of the data applied to the terminal TCTL. Contrary to this, if the data "1" is applied to the terminal $TM_1$, the circuit $M_1$ generates the write enable signal WE ($=$"1") only if the data "1" is applied to the terminal TCTL in a write cycle. Note that the write mode switch circuit $M_1$ also receives a write/read cycle control signal (not shown).

The above-mentioned mode switch circuits $M_0$ and $M_1$ can be constructed with simple logic configurations.

In Fig. 5, if the data "0" is applied to both of the terminals $TM_0$ and $TM_1$, a data signal from the input data buffer IB is written into an area of the memory unit MEM indicated by an external address signal from the address buffer AB. In addition, the written data is read out of an area of the memory unit MEM indicated by an internal address signal from the time slot counter T-CTR and is transmitted via the output data buffer OB to the terminal DO. That is, a random write operation and a sequential read operation are performed in the memory unit MEM.

In Fig. 5, if the data "1" is applied to the terminal $TM_0$ and the data "0" is applied to the terminal $TM_1$, the output of the address selection mode switch circuit $M_0$ is inverted. Therefore, a write operation is performed upon the receipt of an internal address signal from the time slot counter T-CTR and a read operation is performed upon the receipt of an external address signal from the address buffer AB. Thus, a sequential write operation and a random read operation are performed.

In Fig. 5, if the data "1" is applied to the terminal $TM_1$, the circuit $M_1$ generates the write enable signal WE (="1") only if the data "1" is applied to the terminal TCTL. Therefore, in this case, if the data "0" is applied to the terminal $TM_0$, data from the input data buffer IB is written into an area of the memory unit MEM indicated by an external address signal from the address buffer AB. Contrary to this, if the data "1" is applied to the terminal $TM_0$, data from the input data buffer IB is written into an area of the memory unit MEM indicated by an internal address signal from the time slot counter T-CTR.

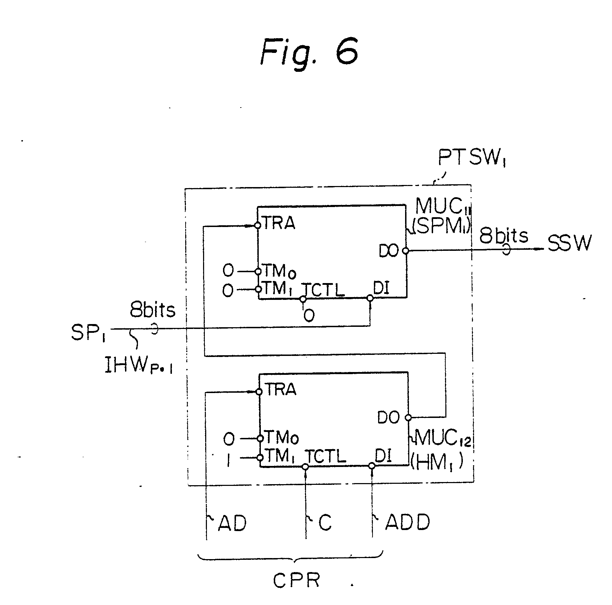

The primary time switch $PTSW_1$, as is illustrated in Fig. 2, is constructed from the circuit $MUC_1$ of Fig. 5. The primary time switch $PTSW_1$ is explained with reference to Fig. 6. In Fig. 6, two memory circuits $MUC_{11}$ and $MUC_{12}$ of the same type as the memory circuit $MUC_1$ of Fig. 5 are provided. That is, the memory circuit $MUC_{11}$ is used as the primary speech path memory $SPM_1$, and the memory circuit $MUC_{12}$ is used as the hold memory $HM_1$ including the time slot counter $T\text{-}CTR_1$ therein.

In the memory circuit $MUC_{11}$, the terminal DI receives the parallel 8-bit signal on the highways $IHW_{p \cdot 1}$, and the terminal DO is connected to the space switch SSW. In addition, the data "0" is applied to both of the terminals $TM_0$ and $TM_1$ so that the memory unit MEM (not shown) of the memory circuit $MUC_{11}$ performs a random write operation and a sequential read operation. In this case, although the data "0" is applied to the terminal TCTL, the data "1" may also be applied thereto. The terminal TRA for external addresses is connected to the terminal DO of the memory circuit $MUC_{12}$.

In the memory circuit $MUC_{12}$, the terminals TRA, TCTL, and DI are connected to the call processor CPR. That is, the terminal TRA receives address information AD and the terminal DI receives write address information ADD. In addition, the data "0" is applied to the terminal $TM_0$, and the data "1" is applied to the terminal $TM_1$ so that the memory unit MEM (not shown) of the circuit $MUC_{12}$ performs a sequential read operation upon the receipt of an internal address signal from the time slot counter T-CTR included in the memory circuit $MUC_{12}$. In addition, the memory circuit $MUC_{12}$ performs a write operation by using the address information AD at the terminal TRA and the write address information ADD at the terminal DI when the control signal at the terminal TCTL is "1". Thus, the call processor CPR sets a speech path at the primary time switch $PTSW_1$.

A speech signal transported over the highways $IHW_{p \cdot 1}$ is written into an area of the memory unit MEM of the memory circuit $MUC_{11}$ indicated by an address signal transmitted from the terminal DO of the memory circuit $MUC_{12}$ to the terminal TRA of the memory circuit $MUC_{11}$ in a write cycle, and a written signal is read out of an area of the memory unit MEM of the memory circuit $MUC_{11}$ indicated by the output of the time slot counter T-CTR of the memory circuit $MUC_{11}$ into the terminal DO thereof in a read cycle. Thus, the primary time switch $PTSW_1$ for performing a random write operation and a sequential read operation is constructed.

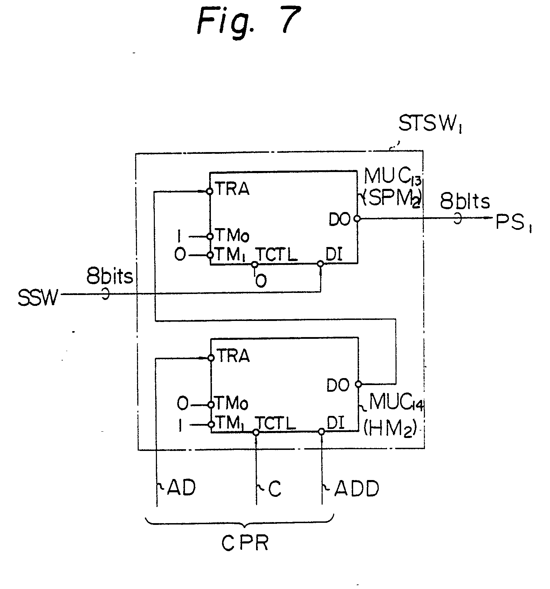

The secondary time switch $STSW_1$, as is illustrated in Fig. 3, is also constructed from the circuit $MUC_1$ of Fig. 5. The secondary time switch $STSW_1$ is now explained with reference to Fig. 7. In Fig. 7, two memory circuits $MUC_{13}$ and $MUC_{14}$ of the same type as the memory circuit $MUC_1$ of Fig. 5 are provided. The memory circuit $MUC_{13}$ is used as the secondary speech path memory $SPM_2$, and the memory circuit $MUC_{14}$ is used as the hold memory $MH_2$ including the time slot counter $T\text{-}CTR_2$ therein. The memory circuits $MUC_{13}$ and $MUC_{14}$ correspond to the memory circuits $MUC_{11}$ and $MUC_{12}$, respectively, of Fig. 6 except that the data "1" is applied to the terminal $TM_0$ of the memory circuit $MUC_{13}$ so that a sequential write operation and a random read operation are performed in the memory unit MEM of the memory circuit $MUC_{13}$.

A speech signal, having parallel 8 bits, from the space switch SSW is written into an area of the memory unit MEM of the memory circuit $MUC_{13}$ indicated by the output of the time slot counter T-CTR of the memory circuit $MUC_{13}$ in a write cycle, and the written signal is read out of an area of the memory unit MEM of the memory circuit $MUC_{12}$ indicated by an address signal transmitted from the terminal DO of the memory circuit $MUC_{14}$ to the terminal TRA of the memory circuit $MUC_{13}$ into the terminal DO thereof in a read cycle. Thus, the secondary time switch $STSW_1$ for performing a sequential write operation and a random read operation is constructed.

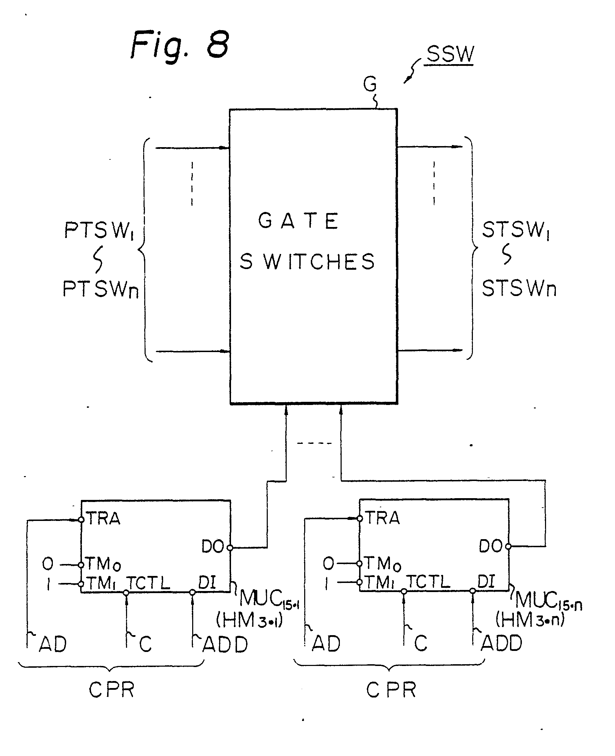

The hold memories $HM_{3 \cdot 1}$ through $HM_{3 \cdot n}$ of the space switch SSW, as is illustrated in Fig. 4 are also constructed from the circuit $MUC_1$ of Fig. 5. The hold memories $HM_{3 \cdot 1}$ through $HM_{3 \cdot n}$ are explained with reference to Fig. 8. In Fig. 8, circuits $MUC_{15 \cdot 1}$ through $MUC_{15 \cdot n}$ of the same type as the memory circuit $MUC_1$ of Fig. 5 are provided. The memory circuits $MUC_{15 \cdot 1}$ through $MUC_{15 \cdot n}$ are used as the hold memories $HM_{3 \cdot 1}$ through $HM_{3 \cdot n}$, respectively, of Fig. 4. In addition, the memory circuits $MUC_{15-1}$ through $MUC_{15-n}$ incorporate the time slot counters $T\text{-}CTR_{3-1}$ through $T\text{-}CTR_{3-n}$, respectively.

Note that the connections of the memory circuits $MUC_{15-1}$ through $MUC_{15-n}$ are similar to those of the memory circuits $MUC_{12}$ and $MUC_{14}$ of Figs. 6 and 7, respectively. That is, in each of the memory circuits $MUC_{15-1}$ through $MUC_{15-n}$, "0" and "1" are applied to the terminals $TM_0$ and $TM_1$, respectively, and the terminals TRA, TCTL, and DI are connected to the call processor CPR. Therefore, the memory unit MEM (not shown) of a circuit such as $MUC_{15-1}$ performs a write operation using the address information AD at the terminal TRA and the write address information ADD at the terminal DI when the control signal at the terminal TCTL is "1". In addition, the memory circuit $MUC_{15-1}$ performs a sequential read operation upon the receipt of an internal address signal from the time slot counter T-CTR, included in the memory circuit $MUC_{15-1}$, so that read data is transmitted to the terminal DO to indicate a gate switch to be turned on. Thus, the call processor CPR sets a speech path for conversion between highways.

Thus, in an embodiment of the present invention, the speech path memories $SPM_1$ and $SPM_2$ and the hold memories $HM_1$, $HM_2$, and $HM_{3-1}$ through $HM_{3-n}$ can be constructed from one kind of memory circuit. In addition, since this kind of memory circuit can be easily constructed from a one-chip LSI semiconductor device, it is possible to reduce the size of the entire digital time-division switching system, thereby increasing the speed of the system. And further, since a digital time-division switching system can be constructed from a plurality of one-chip LSIs of the same configuration, it is easy to design and manufacture the system.

In Fig. 9, which illustrates a second embodiment of the present invention, maintenance read mode switching means comprising a maintenance read mode switch circuit $MR_1$ connected to a terminal TMR are added to the circuit $MUC_1$ of Fig. 5. In addition, the input data buffer IB of Fig. 5 connected to the terminal DI is replaced by an input/output data buffer IB' connected to a terminal DI'. The maintenance read mode switch circuit $MR_1$ does not operate when tha data "0" is applied to the terminal TMR. Contrary to this, when the data "1" is applied to the terminal TMR, read data is transmitted from the memory unit MEM via the read mode switch circuit $MR_1$ to the input/output data buffer IB' in a read cycle. As a result, since the input/output data buffer IB' is bidirectional, the read data is obtained at the terminal DI', thereby checking the data stored in the memory unit MEM. Thus, in the maintenance of the memory circuit $MUC_2$ of Fig. 9, the contents of the memory unit MEM can be detected without the incorporation of an additional terminal.

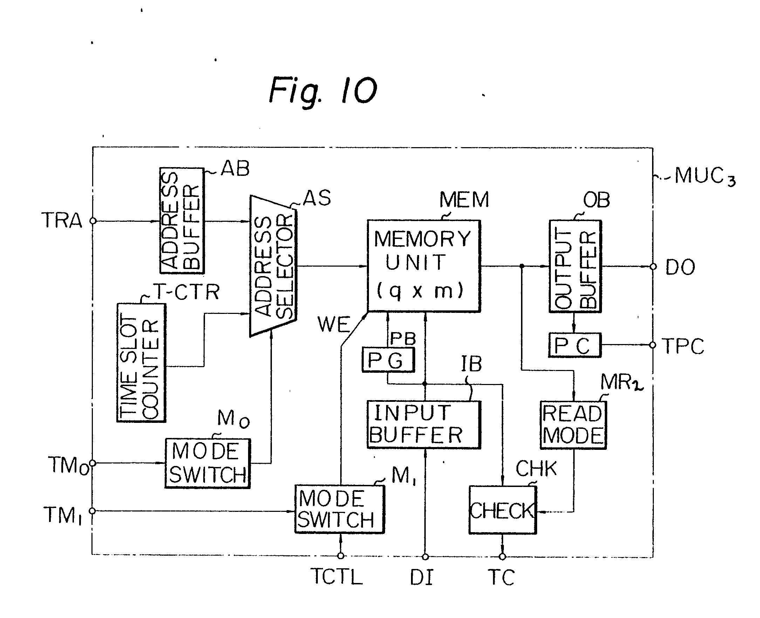

In Fig. 10, which illustrates a third embodiment of the present invention, a parity bit generator PG, a parity bit check circuit PC connected to a terminal TPC, maintenance read mode circuitry comprising a maintenance read mode circuit $MR_2$, and data check circuitry comprising a data check circuit CHK connected to a terminal TC are added to the circuit $MUC_1$ of Fig. 5. Note that the maintenance read mode circuitry $MR_2$ has the same function as the maintenance read mode switching means of Fig. 9. However, the maintenance read mode circuitry $MR_2$ has no terminal indicated from the outside, and, therefore, the maintenance read mode circuitry $MR_2$ is always in a maintenance read mode.

In Fig. 10, data is transmitted from the terminal DI via the input data buffer IB to the memory unit MEM and, simultaneously, to the parity bit generator PG, which generates a parity check bit PB for the input data. The parity check bit PB is also transmitted to the memory unit MEM and is written into the same area of the memory unit MEM as the input data.

In a read cycle, the above data, as well as the parity check bit PB, is read out to the output data buffer OB, which transmits the data, without the parity check bit PB, to the terminal DO. Simultaneously, the data, as well as the parity check bit PB, is transmitted from the output data buffer OB to the data check circuit CHK, which performs a check operation. The result of checking is transmitted from the parity bit check circuit PC to the terminal TPC.

In order to check whether input data is correctly written into an indicated area of the memory unit MEM, the maintenance read mode circuit $MR_2$ and the data check circuit CHK operate. In this case, suitable data is applied to the terminals $TM_0$, $TM_1$, and TCTL. In a write cycle, test data from the terminal DI is written into an area of the memory unit MEM indicated by an address transmitted from the terminal TRA. Similarly, in the next read cycle, the same address is transmitted from the terminal TRA to read out the test data of the memory unit MEM. As a result, the read test data is transmitted via the maintenance read mode circuit $MR_2$ to the data check circuit CHK, in which the read test data is compared with the test data stored in the input data buffer IB. If the two pieces of data are the same, the data check circuit CHK generates a coincidence signal which is transmitted to the terminal TC, thereby indicating that the test data is correctly written into an indicated area of the memory unit MEM. Contrary to this, if the two pieces of data are different from each other, the data check circuit CHK generates no coincidence signal, thereby indicating that the write operation is incorrectly performed. Thus, the operation of the memory unit MEM is checked.

In Fig. 10, note that an output from the terminal TPC or TC is necessary when a parity check operation is performed or when the memory unit MEM is tested. But if such a parity check operation and a test operation are unnecessary, an output from the terminals TPC and TC is unnecessary.

The primary and secondary time switches and the hold memories of Figs. 2, 3, and 4 can also be constructed from the memory circuit of Fig. 9 or Fig. 10.

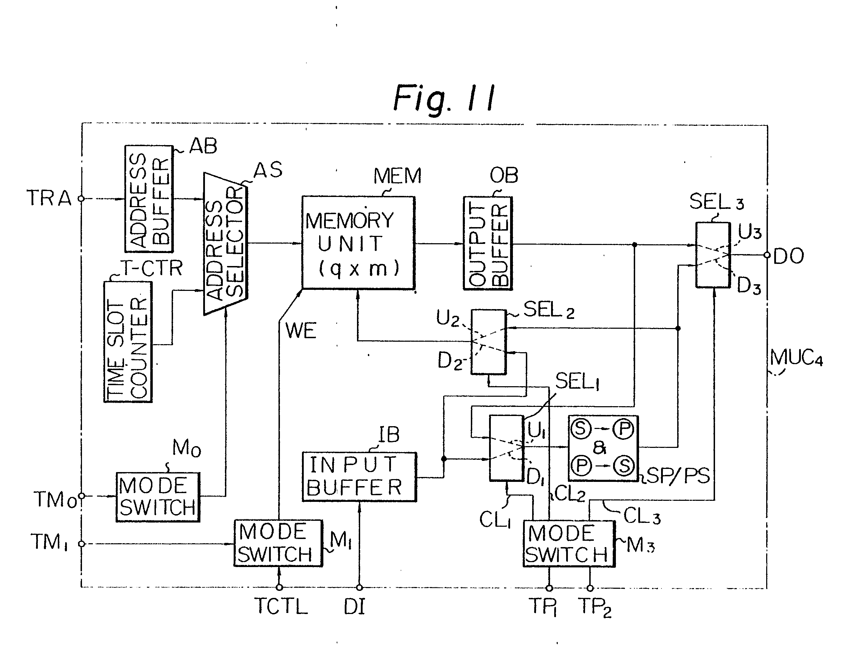

In Fig. 11, which illustrates a fourth embodiment of the present invention, conversion circuitry comprising a common circuit SP/PS for serial-to-parallel conversion and parallel-to-serial conversion, route selecting means comprising route selectors $SEL_1$, $SEL_2$, and $SEL_3$, and route-selection mode switching means comprising a route selection mode switch circuit $M_3$ connected to terminals $TP_1$ and $TP_2$ are added to the circuit $MUC_1$ of Fig. 5. That is, the serial-to-parallel conversion circuit $SP_1$ of Fig. 2 and the parallel-to-serial conversion circuit $PS_1$ of Fig. 3 are constructed as a common circuit SP/PS.

Note that the configuration of such a circuit for serial-to-parallel conversion and parallel-to-serial conversion is well known.

The route selection mode switch $M_3$ and the route selectors $SEL_1$, $SEL_2$, and $SEL_3$ operate in accordance with the following table:

| $TP_1$ | $TP_2$ | $CL_1$ | $CL_2$ | $CL_3$ |
|--------|--------|--------|--------|--------|
| "0" | "0" | "0" | "1" | "1" |
| "1" | "0" | "1" | "0" | "0" |
| "0" | "1" | "1" | "0" | "1" |
| "1" | "1" | "0" | "0" | "1" |

In the above table, $CL_1$, $CL_2$, and $CL_3$ designate control signals for the route selectors $SEL_1$, $SEL_2$, and $SEL_3$, respectively. For example, if the control signal $CL_1$ is "1", the route selector $SEL_1$ selects the up route $U_1$ while if the control signal $CL_1$ is "0", the route selector $SEL_1$ selects the down route $D_1$.

When the data "0" is applied to both of the terminals $TP_1$ and $TP_2$, the control signals $CL_1$, $CL_2$, and $CL_3$ of the route selection mode switch circuit $M_3$ are "0", "1", and "1", respectively. Therefore, the route selector $SEL_1$ selects the down route $D_1$, and the route selectors $SEL_2$ and $SEL_3$ select the up routes $U_2$ and $U_3$, respectively. As a result, input data such as serial 8 bits per each time slot from the terminal DI is transmitted via the input data buffer IB and the down route $D_1$ of the selector $SEL_1$ to the circuit SP/PS, in which a serial-to-parallel conversion operation is performed. This converted data is then transmitted via the up route $U_2$ of the route selector $SEL_2$ to the memory unit MEM. On the other hand, parallel data read out of the memory unit MEM is transmitted via the output data buffer OB and the up route $U_3$ of the route selector $SEL_3$ to the terminal DO. Thus, the memory circuit $MUC_4$ of Fig. 11 in the case where the data "0" is applied to both of the terminals $TP_1$ and $TP_2$ can be used as the speech path memory $SPM_1$ including the serial-to-parallel conversion circuit $SP_1$ of Fig. 2.

When the data "1" is applied to the terminal $TP_1$ and the data "0" is applied to the terminal $TP_2$, the control signals $CL_1$, $CL_2$, and $CL_3$ of the route selection mode switch circuit $M_3$ are "1", "0" and "0", respectively, as indicated above. Therefore, the route selector $SEL_1$ selects the up route $U_1$, and the route selectors $SEL_2$ and $SEL_3$ select the down routes $D_2$ and $D_3$, respectively. As a result, input data such as parallel 8 bits per each time slot from the terminal DI is transmitted via the input data buffer IB and the down route $D_2$ of the selector $SEL_2$ to the memory unit MEM. On the other hand, parallel data read out of the memory unit MEM is transmitted via the output data buffer OB and the up route $U_1$ of the route selector $SEL_1$ to the circuit SP/PS, in which a parallel-to-serial conversion operation is performed. This converted data is then transmitted via the down route $D_3$ of the route selector $SEL_3$ to the terminal DO. Thus, the memory circuit $MUC_4$ of Fig. 11 in the case where the data "1" is applied to the terminal $TP_1$ and the data "0" is applied to the terminal $TP_2$ can be used as the speech path memory $SPM_2$ including the parallel-to-serial conversion circuit $SP_2$ of Fig. 3.

When the data "0" is applied to the terminal $TP_1$ and the data "1" is applied to the terminal $TP_2$, the control signals $CL_1$, $CL_2$, and $CL_3$ of the route selection mode switch circuit $M_3$ are "1", "0", and "1", respectively. Therefore, the route selectors $SEL_1$ and $SEL_3$ select the up routes $U_1$ and $U_3$, respectively, and the route selector $SEL_2$ selects the down route $D_2$. As a result, input data transmitted from the terminal DI cannot pass through the circuit SP/PS, and, accordingly, no serial-to-parallel conversion and no parallel-to-serial conversion are performed on the input data. That is, the input data is transmitted via the down route $D_2$ of the route selector $SEL_2$ to the memory unit MEM. On the other hand, data read from the memory unit MEM is transmitted via the output data buffer OB and the up route $U_3$ of the route selector $SEL_3$ to the terminal DO. In this case, the data is also transmitted via the up route $U_2$ to the circuit SP/PS. However, the signal converted by the circuit SP/PS is not transmitted to any elements.

Note that the case where the data "1" is applied to both of the terminals $TP_1$ and $TP_2$ corresponds to the case where the data "0" is applied to the terminal $TP_1$ and the data "1" is applied to the terminal $TP_2$. That is, no substantial serial-to-parallel or parallel-to-serial conversion is performed in either case. Thus, the memory circuit $MUC_4$ of Fig. 11 in the case where the data "0" or "1" is applied to the terminal $TP_1$ and the data "1" is applied to the terminal $TP_2$ can be used as the hold memories $MH_1$, $MH_2$, and $MH_{3 \cdot 1}$ through $MH_{3 \cdot n}$ of Fig. 2, 3, and 4.

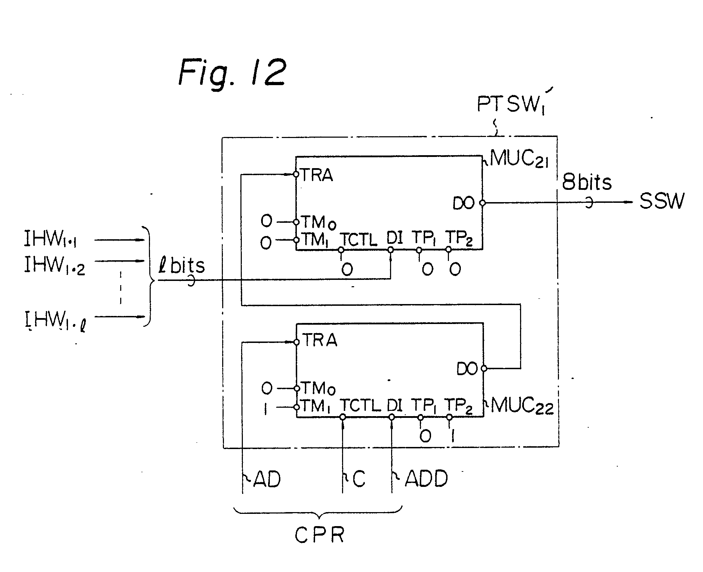

The primary time switch $PTSW_1$ of Fig. 2, the secondary time switch $STSW_1$ of Fig. 3, and the space switch SSW of Fig. 4 can be constructed from the memory circuit $MUC_4$ of Fig. 11, which switches are explained below with reference to Figs. 12, 13, and 14, respectively.

In Fig. 12, a primary time switch $PTSW_1'$

includes the primary time switch PTSW$_1$ and the serial-to-parallel conversion circuit SP$_1$ of Fig. 2. Two memory circuits MUC$_{21}$ and MUC$_{22}$ have the same configuration as the memory circuit MUC$_4$ of Fig. 11. In the memory circuit MUC$_{21}$, since the data "0" is applied to both of the terminals TP$_1$ and TP$_2$, the memory circuit MUC$_{21}$ serves as the speech path memory SPM$_1$ as well as the serial-to-parallel conversion circuit SP$_1$ of Fig. 2. On the other hand, in the memory circuit MUC$_{22}$, since the data "0" is applied to the terminal TP$_1$ and the data "1" is applied to the terminal TP$_2$, the circuit SP/PS does not affect the operation of the circuit MUC$_{22}$, and, accordingly, the memory circuit MUC$_{22}$ is the same as the memory circuit MUC$_{12}$ of Fig. 6, that is, the memory circuit MUC$_{22}$ serves as the hold memory HM$_1$ as well as the time slot counter T-CTR$_1$ of Fig. 2.

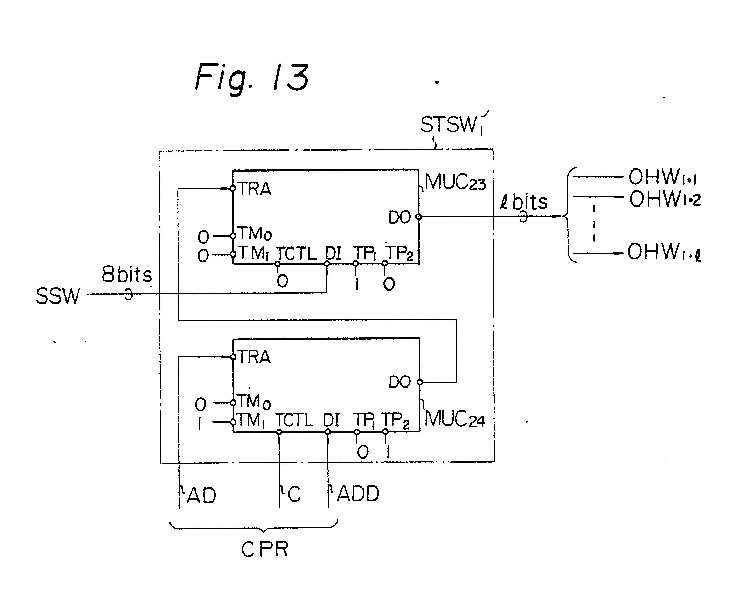

In Fig. 13, a secondary time switch STSW$_1$' includes the secondary time switch PTSW$_1$ and the parallel-to-serial conversion circuit PS$_1$ of Fig. 3. Two memory circuits MUC$_{23}$ and MUC$_{24}$ have the same configuration as the memory circuit MUC$_4$ of Fig. 11. In the memory circuit MUC$_{23}$, since the data "1" is applied to the terminal TP$_1$ and the data "0" is applied to the terminal TP$_2$, the memory circuit MUC$_{23}$ serves as the speech path memory SPM$_2$ as well as the parallel-to-serial conversion circuit PS$_1$ of Fig. 3. On the other hand, in the memory circuit MUC$_{24}$, since the data "0" is applied to the terminal TP$_1$ and the data "1" is applied to the terminal TP$_2$, the circuit SP/PS does not affect the operation of the circuit MUC$_{24}$, and, accordingly, the memory circuit MUC$_{24}$ is the same as the memory circuit MUC$_{14}$ of Fig. 7, that is, the memory circuit MUC$_{24}$ serves as the hold memory HM$_2$ as well as the time slot counter T-CTR$_2$ of Fig. 3.

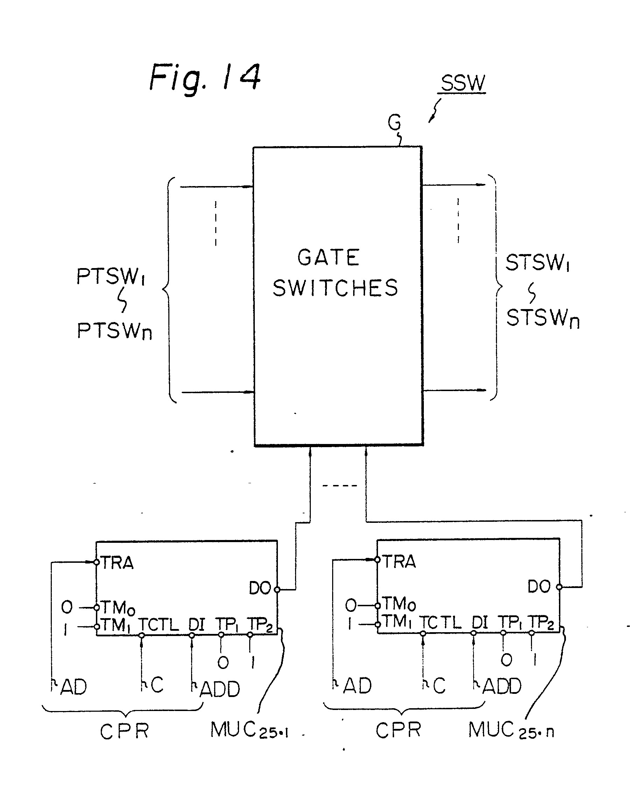

In Fig. 14, memory circuits MUC$_{25 \cdot 1}$ through MUC$_{25 \cdot n}$ have the same configuration as the memory circuit MUC$_4$ of Fig. 11. In each of the memory circuits MUC$_{25 \cdot 1}$ through MUC$_{25 \cdot n}$, since the data "0" is applied to the terminal TP$_1$ and the data "1" is applied to the terminal TP$_2$, the circuit SP/PS does not affect the operation of the circuits MUC$_{25 \cdot 1}$ through MUC$_{25 \cdot n}$ of Fig. 14, and accordingly, the memory circuits MUC$_{25 \cdot 1}$ through MUC$_{25 \cdot n}$ are the same as the memory circuits MUC$_{15 \cdot 1}$ through MUC$_{15 \cdot n}$ of Fig. 8.

In Figs. 5 through 14, a plurality of terminals TRA, a plurality of terminals DI, and a plurality of terminal DO are actually necessary for each memory circuit. However, only one of each of these terminals is illustrated for the sake of simplicity.

## Claims

1. A circuitry module, for use in a digital time-division switching system, comprising:
a memory unit (MEM);
an address selector (AS) connected to the memory unit for transmitting address signals thereto;
address input means (TRA, AB) whereby externally supplied first address signals can be passed to the address selector;
a counter (T-CTR), connected to the address selector, for generating second address signals;
address selection mode switching means (M$_0$), selectively switchable by an externally applied first setting signal, for causing said address selector to transmit either said first address signals or said second address signals in dependence upon whether or not a write enable signal is applied to the memory unit;
write enable switching means (M$_1$) connected to the memory unit, for applying write enable signals thereto;
data input means for transmitting externally supplied data to said memory unit; and
data output means for delivering data from the said memory unit to an external circuit; characterised in that the said write enable switching means (M$_1$) are selectively switchable by an externally applied second setting signal into either a first mode, in which a write enable signal (WE) is applied to the memory unit in a write cycle of the module when a predetermined control signal (C) is applied to an external control input (TCTL) of the write enable switching means, or a second mode in which a write enable signal is applied to the memory unit in a write cycle irrespective of whether such a control signal is applied to the external control input (TCTL), the write enable switching means having a further input for receiving a write/read cycle defining signal when the module is in use.

2. A circuitry module as claimed in claim 1, including an input/output data buffer (IB') which comprises the said data input means, and further comprising maintenance read mode switching means (MR$_1$), having a terminal (TMR) and being connected to the said input/output data buffer and to the said memory unit (MEM), for transmitting data read out of the said memory unit to the said input/output data buffer upon application of a control signal to the said terminal (TMR).

3. A circuitry module as claimed in claim 1, further comprising:
maintenance read mode circuitry (MR$_2$), connected to the said memory unit (MEM); and
data check circuitry (CHK), connected to the said data input means and to the said maintenance read mode circuitry, for comparing output data from the said maintenance read mode circuitry with the output of the said data input means, to generate a coincidence signal depending on the result of the comparison.

4. A circuitry module as claimed in any preceding claim further comprising:
a parity bit generator (PG), connected to the said data input means and to the said memory unit (MEM), for generating a parity check bit (PB) of the output data of the said data input means and transmitting it to the said memory unit; and
a parity bit check circuit (PC), connected to the said data output means, for performing a parity check operation upon output data from the said data output means.

5. A digital time-division switching system comprising primary time switches (PTSW), a space switch (SSW) and secondary time switches (STSW), each primary time switch including a primary speech path memory (SPM$_1$) and address signal generation means and a hold memory (HM$_1$) for storing and delivering address signals to the primary speech path memory, the space switch including gate switches (G) and hold memories (HM) for controlling the gate switches, and each secondary time switch (STSW) including a secondary speech path memory (SPM$_2$) and address signal generation means and a hold memory (HM$_2$) for storing and delivering address signals to the secondary speech path memory, characterised in that the speech path memories and hold memories are provided by respective circuitry modules (MUC), each of which is a module as claimed in any preceding claim.

6. A system as claimed in claim 5, wherein each of the said primary time switches (PTSW) is formed from a first such circuitry module (MUC$_{11}$, MUC$_{21}$) which comprises the said primary speech path memory (SPM$_1$) and the said address signal generation means of the primary time switch (PTSW), and a second such circuitry module (MUC$_{12}$, MUC$_{22}$) which comprises the said hold memory (HM$_1$) of the primary time switch;

and wherein, in each of the said first and second such circuitry modules:

the memory unit (MEM) is capable of storing a predetermined number of m-bit words;

the address input means include an address buffer (AB) having address terminal means (TRA);

the counter (T-CTR) is operable to count up to m time-slots;

the address selector (AS) is connected to the address buffer (AB), to the counter (T-CTR) and to the memory unit (MEM), for selecting one of the said first and second address signals and transmitting it to the memory unit (MEM);

the address selection mode switching means (M$_0$) are connected to the address selector (AS), for controlling the selection mode of the address selector;

the data input means include an input data buffer (IB), connected to the memory unit (MEM) and having input terminal means (DI); and

the data output means include an output data buffer (OB), connected to the memory unit (MEM) and having output terminal means (DO);

and wherein, in each of the said primary time switches (PTSW) the said output terminal means (DO) of the second circuitry module are connected to the address terminal means (TRA) of the first circuitry module, the address selection mode switching means (M$_0$) of the first and second circuitry modules are controlled so that the address selector (AS) of each of the first and second circuitry modules selects the said first address signal in a write cycle and selects the said second address signal in a read cycle, the write enable switching means (M$_1$) of the first circuitry module are controlled to generate the said write enable signal in every write cycle, and the write enable switching means (M$_1$) of the second circuitry module are controlled to generate the said write enable signal only upon the receipt of a control signal (C) in a write cycle.

7. A system as claimed in claim 5 or 6, wherein each of the said secondary time switches (STSW) is formed from a first such circuitry module (MUC$_{13}$, MUC$_{23}$), which comprises the said secondary speech path memory (SPM$_2$) and the address signal generation means of the secondary time switch (STSW), and a second such circuitry module (MUC$_{14}$, MUC$_{24}$) which comprises the said hold memory (HM$_2$) of the secondary time switch;

and wherein, in each of the said first and second circuitry modules of each secondary time switch:

the memory unit (MEM) is capable of storing a predetermined number of m-bit words;

· the address input means include an address buffer (AB) having address terminal means (TRA);

the counter (T-CTR) is operable to count up to m time-slots;

the address selector (AS) is connected to the address buffer (AB), to the counter (T-CTR), and to the memory unit (MEM), for selecting one of the said first and second address signals and transmitting it to the memory unit;

the address selection mode switching means (M$_0$) are connected to the address selector (AS), for controlling the selection mode of the address selector;

the data input means include an input data buffer (IB), connected to the memory unit (MEM) and having input terminal means (DI); and

the data output means include an output data buffer (OB), connected to the memory unit (MEM) and having output terminal means (DO);

and wherein, in each of the said secondary time switches the said output terminal means (DO) of the second circuitry module are connected to the address terminal means (TRA) of the first circuitry module, the address selection mode switching means (M$_0$) of the first circuitry module are controlled so that the address selector (AS) of the first circuitry module selects the said second address signal in a write cycle and selects the said first address signal in a read cycle, the write enable switching means (M$_1$) of the first circuitry module are controlled to generate the said write enable signal in every write cycle, the address selection mode switching means (M$_0$) of the second circuitry module are controlled so that the address selector (AS) of the second circuitry module selects the said first address signal in a write cycle and selects the said second address signal in a read cycle, and the write enable switching means (M$_1$) of the second circuitry module are controlled to generate the said write enable signal only upon the receipt of a control signal (C) in a write cycle.

8. A system as claimed in claim 5, 6 or 7, wherein each of the said space switches (SSW) includes a gate portion (G), having gate switches, a plurality of hold memories ($HM_{3\text{-}1}$ to $HM_{3\text{-}n}$), each for generating a selection signal for indicating one of the said gate switches, and a plurality of time slot counters ($T\text{-}CTR_{3\text{-}1}$ to $T\text{-}CTR_{3\text{-}n}$) each for generating a read address for the said hold memories, and is formed from a plurality of such circuitry modules ($MUC_{15\text{-}1}$ to $MUC_{15\text{-}n}$), each comprising one of the said hold memories ($HM_{3\text{-}1}$ to $HM_{3\text{-}n}$) and one of the said time slot counters ($T\text{-}CTR_{3\text{-}1}$ to $T\text{-}CTR_{3\text{-}n}$), and wherein, in each of the said circuitry modules of each space switch:

the memory unit (MEM) is capable of storing a predetermined number of m-bit words;

the address input means include an address buffer (AB) having address terminal means (TRA);

the time-slot counter (T-CTR) is operable to count up to m time-slots;

the address selector (AS) is connected to the address buffer (AB), to the time slot counter (T-CTR) and to the memory unit (MEM), for selecting one of the said first and second address signals and transmitting it to the memory unit;

the address selection mode switching means ($M_0$) are connected to the address selector, for controlling the selection mode of the address selector;

the data input means include an input data buffer (IB) connected to the memory unit and having input terminal means (DI); and

the data output means include an output data buffer (OB) connected to the said memory unit and having output terminal means (DO);

and wherein, in each of the said space switches, the output terminal means (DO) of the said circuitry modules are connected to the said gate portion, the address selection mode switching means ($M_0$) of each of the circuitry modules are controlled so that the address selector (AS) of each of the circuitry modules selects the said first address signal in a write cycle and selects the said second address signal in a read cycle, and the write enable switching means ($M_1$) of each of the circuitry modules are controlled to generate the said write enable signal only upon the receipt of a control signal (C) in a write cycle.

9. A system as claimed in claim 6, wherein each of the said first and second circuitry modules ($MUC_{21}$, $MUC_{22}$) further comprises:

conversion circuitry (SP/PS) for performing both serial-to-parallel conversion and parallel-to-serial conversion;

route-selecting means ($SEL_1$ to $SEL_3$) interconnected with the said conversion circuitry and the said data input means and the said data output means and the said memory unit (MEM) of the module; and

route-selection mode switching means ($M_3$), connected to the said route-selecting means, for controlling the said route-selecting means;

the said route-selection mode switching means in the said first circuitry module ($MUC_{21}$) controlling the said route-selecting means so that the said conversion circuitry (SP/PS) therein is connected in series to the said data input means, and the said route-selection mode switching means in the said second circuitry module ($MUC_{22}$) controlling the said route-selecting means so that the said conversion circuitry therein does not affect the operation of that circuitry module.

10. A system as claimed in claim 7, wherein each of the first first and second circuitry modules ($MUC_{23}$, $MUC_{24}$) in each secondary time switch further comprises:

conversion circuitry (SP/PS) for both serial-to-parallel conversion and parallel-to-serial conversion;

route-selecting means ($SEL_1$ to $SEL_3$) interconnected with the said conversion circuitry and the said data input means and the said data output means and the said memory unit (MEM); and

route-selection mode switching means ($M_3$), connected to the said route-selecting means, for controlling the said route-selecting means;

and wherein, in each secondary time switch, the said route-selection mode switching means in the first circuitry module ($MUC_{23}$) control the said route-selecting means so that the said conversion circuitry therein is connected in series to the said data output means, and the said route-selection mode switching means in the second circuitry module ($MUC_{24}$) control the said route-selecting means so that the said conversion circuitry therein does not affect the operation of that circuitry module.

## Patentansprüche

1. Schaltungsmodul zur Verwendung in einem Zeitmultiplexvermittlungssystem, mit;

einer Speichereinheit (MEM);

einem Adressenselektor (AS), der mit der Speichereinheit verbunden ist, um zu dieser Adressensignale zu übertragen;

Adresseneingangseinrichtungen (TRA, AB), wodurch von außen zugeführte erste Adressensignale zu dem Adressenselektor hindurchgelassen werden können;

einem Zähler (T-CTR), der mit dem Adressenselektor verbunden ist, um zeite Adressensignale zu erzeugen;

Adressenselektionsmoden-Schalteinrichtungen ($M_0$), die wahlweise durch ein von außen zugeführtes erstes Einstellsignal schaltbar sind, um zu bewirken, daß der Adressenselektor entweder die genannten ersten Adressensignale oder die genannten zweiten Adressensignale in Abhängigkeit davon überträgt, ob ein Schreibfreigabesignal zu der Speichereinheit zugeführt wird oder nicht;

Schreibfreigabeschalteinrichtungen ($M_1$), die mit der Speichereinheit verbunden sind, um Schreibfreigabesignale zu dieser zu führen;

Dateneingabeeinrichtungen zum Senden von von außen zugeführten Daten zu der Speichereinheit; und

Datenausgabeeinrichtungen zur Lieferung von Daten von der genannten Speichereinheit zu einer externen Schaltung; dadurch gekennzeichnet, daß die Schreibfreigabeschalteinrichtungen (M₁) wahlweise durch ein von außen zugeführtes zweites Einstellsignal schaltbar sind, entweder in einem ersten Modus, in dem ein Schreibfreigabesignal (WE) zu der Speichereinheit in einem Schreibzyklus des Moduls zugeführt wird, wenn ein vorbestimmtes Steuersignal (C) zu einem äußeren Steuereingang (TCTL) den Schreibfreigabeschalteinrichtungen zugeführt wird, oder in einen zweiten Modus, in dem ein Schreibfreigabesignal zu der Speichereinheit in einem Schreibzyklus zugeführt wird, unabhängig davon, ob solch ein Steuersignal zu dem äußeren Steuereingang (TCTL) den Schreibfreigabeschalteinrichtungen zugeführt wird, und die Schreibfreigabeshalteinrichtungen einen weiteren Eingang zum Empfang eines einen Schreib/Lese-Zyklus definierenden Signals haben, wenn der Modul in Betrieb ist.

2. Schaltungsmodul nach Anspruch 1, mit einem Eingangs/Ausgangs-Datenpuffer (IB'); der die genannte Dateneingabeeinrichtung umfaßt, und ferner mit einer Aufrechterhaltungslesemodus-Schalteinrichtung (MR₁), die einen Anschluß (TMR) hat und mit dem genannten Eingabe/Ausgabe-Datenpuffer und der genannten Speichereinheit (MEM) verbunden ist, um Daten, die aus der genannten Speichereinheit gelesen werden, bei Zuführung eines Steuersignals zu dem genannten Anschluß (TMR) zu dem genannten Eingabe/Ausgabe-Datenpuffer zu übertragen.

3. Schaltungsmodul nach Anspruch 1, ferner mit:

einer Aufrechterhaltungslesemodus-Schaltung (MR₂), die mit der genannten Speichereinheit (MEM) verbunden ist; und

einer Datenprüfschaltung (CHK), die mit der genannten Dateneingabeeinrichtung und mit der genannten Aufrechterhaltungs - Lesemodusschaltung verbunden ist, um Ausgabedaten von der genannten Aufrechterhaltungs-Lesemodusschaltung mit dem Ausgang der genannten Dateneingabeeinrichtung zu vergleichen, um, abhängig von dem Ergebnis des Vergleichs, ein Koinzidenzsignal zu erzeugen.

4. Schaltungsmodul nach einem der vorhergehenden Ansprüche, ferner mit:

einem Paritätsbitgenerator (PG), der mit der genannten Dateneingabeeinrichtung und der genannten Speichereinheit (MEM) verbunden ist, um ein Paritätsprüfbit (PB) der Ausgangsdaten der genannten Dateneingabeeinrichtung zu erzeugen und um es zu der genannten Speichereinheit zu übertragen; und

einer Paritätsbitprüfschaltung (PC), die mit der genannten Datenausgabeeinrichtung verbunden ist, um einen Paritätsprüfbetrieb mit den Ausgangsdaten von der genannten Datenausgabeeinrichtung durchzuführen.

5. Digitales Zeitmultiplex-Vermittlungssystem, mit primären Zeitschaltern (PTSW), einem Raumschalter (SSW) und sekündären Zeitschaltern (STSW), von denen jeder primäre Zeitschalter einen primären Sprachwegspeicher (SPM₁) und Adressensignalgeneratoreinrichtungen und einen Haltespeicher (HM₁) zum Speichern und Liefern von Adressensignalen zu dem ersten Sprachwegspeicher umfaßt, der Raumschalter Torschalter (G) und Haltespeicher (HM) zur Steuerung der Torschalter umfaßt, und jeder sekundäre Zeitschalter (STSW) einen sekundären Sprachwegspeicher (SPM₂) und Adressensignalgeneratoreinrichtungen und einen Haltespeicher (HM₂) zum Speichern und Liefern von Adressensignalen zu dem zweiten Sprachwegspeicher umfaßt, dadurch gekennzeichnet, daß die Sprachwegspeicher und Haltespeicher durch jeweilige Schaltungsmoduln (MUC) vorgesehen sind, von denen jeder ein Modul nach einem der vorgehenden Ansprüche ist.

6. System nach Anspruch 5, bei welchem jeder der genannten primären Zeitschalter (PTSW) aus einem ersten solchen Schaltungsmodul (MUC₁₁, MUC₂₁) gebildet ist, der den genannten Sprachwegspeicher (SPM₁) und die genannte Adressensignalgeneratoreinrichtung des primären Zeitschalters (PTSW) umfaßt, und aus einem zweiten solchen Schaltungsmodul (MUC₁₂, MUC₂₂), der den genannten Haltespeicher (HM₁) des primären Zeitschalters umfaßt;

und bei welchem in jedem der genannten ersten und zweiten solcher Schaltungsmoduln:

die Speichereinheit (MEM) fähig ist, eine vorbestimmte Anzahl von M-Bit-Wörtern zu speichern;

die Adresseneingabeeinrichtung einen Adressenpuffer (AB) umfaßt, der Addressenanschlußeinrichtungen (TRA) hat;

der Zähler (T-CTR) betreibbar ist, um m-Zeitschlitze vorwärts zu zählen;

der Adressenselektor (AS) mit dem Adressenpuffer (AB), mit dem Zähler (T-CTR) und der Speichereinheit (MEM) verbunden ist, um eines der genannten ersten und zweiten Adressensignale auszuwählen und es an die Speichereinheit (MEM) zu übertragen;

die Adressenauswahlmoden-Schalteinrichtungen (M₀) mit dem Adressenselektor (AS) verbunden sind, um den Selektionsmodus des Adressenselektors zu steuern;

die Dateneingabeeinrichtung einen ersten Datenpuffer (IB) um faßt, der mit der Speichereinheit (MEM) verbunden ist und Eingangsanschlußeinrichtungen (DI) umfaßt; und

die Datenausgabeeinrichtung einen Ausgabedatenpuffer (OB) umfaßt, der mit der Speichereinheit (MEM) verbunden ist und Ausgangsanschlußeinrichtungen (DO) umfaßt;

und bei welchem in jedem der primären Zeitschalter (PTSW) die Ausgangsanschlußeinrichtungen (DO) des zweiten Schaltungsmoduls mit den Adressenanschlußeinrichtungen (TRA) des ersten Schaltungsmoduls verbunden sind, die Adressenauswahlmoden-Schalteinrichtugen (M₀) der ersten und zweiten Schaltungsmoduln so gesteuert werden, daß der Adressenselektor (AS) von jedem der ersten und zweiten Schaltungsmoduln das genannte erste Adressensignal in einem Schreibzyklus auswählt und das genannte zweite Adressensignal in einem Lesezyklus auswählt, die Schreibfreigabeschalteinrichtungen ($M_1$) des ersten Schaltungsmoduls gesteuert werden, um das genannte Schreibfreigabesignal bei jedem Schreibzyklus zu erzeugen, und die Schreibfreigabeschalteinrichtungen ($M_1$) des zweiten Schaltungsmoduls gesteuert werden, um das genannte Schreibfreigabesignal lediglich bei dem Empfang eines Steuersignals (C) in einem Schreibzyklus zu erzeugen.

7. System nach Anspruch 5 oder 6, bei welchem jeder der sekundären Zeitschalter (STSW) aus einem ersten solchen Schaltungsmodul ($MUC_{13}$, $MUC_{23}$) gebildet ist, der den genannten sekundären Sprachwegspeicher ($SPM_2$) und die Adressensignalgeneratoreinrichtungen des sekundären Zeitschalters (STSW) umfaßt, und einem zweiten solchen Schaltungsmodul ($MUC_{14}$, $MUC_{24}$), welcher den genannten Haltespeicher ($HM_2$) des sekun- dären Zeitschalters umfaßt;
und in dem in jedem der genannten ersten und zweiten Schaltungsmoduln von jedem sekundären Zeitschalter:

die Speichereinheit (MEM) fähig ist, eine vorbestimmte Anzahl von m-Bit-Wörtern zu speichern;
die Adresseneingabeeinrichtung einen Adressenpuffer (AB) umfaßt, der Adressenanschlußeinrichtungen (TRA) hat;
der Zähler (T-CTR) fähig ist, m-Zeitschlitze vorwärts zu zählen;
der Adressenselektor (AS) mit dem Adressenpuffer (AB), mit dem Zähler (T-CTR) und mit der Speichereinheit (MEM) verbunden ist, um eines der genannten ersten und zweiten Adressensignale auszuwählen und es zu der Speichereinheit zu übertragen;
die Adressenselektionsmoden-Schalteinrichtungen ($M_0$) mit dem Adressenselektor (AS) verbunden sind, um den Selektionsmodus des Adressenselektors zu steuern;
die Dateneingabeeinrichtung einen Eingabedatenpuffer (IB) umfaßt, der mit der Speichereinheit (MEM) verbunden ist und Eingangsanschlußeinrichtungen (DI) hat; und
die Datenausgabeeinrichtung einen Ausgangsdatenpuffer (OB) umfaßt, der mit der Speichereinheit (MEM) verbunden ist und Ausgangsanschlußeinrichtungen (DO) hat;
und in dem in jedem der sekundären Zeitschalter die genannten Ausgangsanschlußeinrichtungen (DO) des sekundären Schaltungsmoduls mit den Adressenanschlußeinrichtungen (TRA) des ersten Schaltungsmoduls verbunden sind, die Adressenauswahlmoden-Schalteinrichtungen ($M_0$) des ersten Schaltungsmoduls so gesteuert werden, daß der Adressenselektor (AS) des ersten Schaltungsmoduls das genannte zweite Adressensignal in einem Schreibzyklus auswählt und das genannte erste Adressensignal in einem Lesezyklus auswählt, die Schreibfreigabeschalteinrichtungen ($M_1$) des ersten Schaltungsmoduls so gesteuert werden, daß sie das genannte Schreibfreigabesignal bei jedem Schreibzyklus erzeugen, die Adressenauswahlmoden-Schalteinrichtungen ($M_0$) der zweiten Schaltungsmoduln so gesteuert werden, daß der Adressenselektor (AS) des zweiten Schaltungsmoduls das genannte erste Adressensignal in einem Schreibzyklus auswählt und das genannte zweite Adressensignal in einem Lesezyklus auswählt, und die Schreibfreigabeschalteinrichtungen des zweiten Schaltungsmoduls so gesteuert werden, daß sie das genannte Schreibfreigabesignal lediglich bei Empfang eines Steuersignals (C) in einem Schreibzyklus erzeugen.

8. System nach Anspruch 5, 6 oder 7, bei dem jeder der genannten Raumschalter (SSW) einen Torabschnitt (G), der Torschalter hat, eine Vielzahl von Haltespeichern ($HM_{3.1}$ bis $HM_{3.n}$), jeweils zur Erzeugung eines Auswahlsignals, um einen der genannten Torschalter anzuzeigen, und eine Vielzahl von Zeitschlitzzählern ($T\text{-}CTR_{3.1}$—$T\text{-}CTR_{3.n}$), jeweils zur Erzeugung einer Leseadresse für die genannten Haltespeicher, umfaßt, und von einer Vielzahl von solchen Schaltungsmoduln ($MUC_{15.1}$ bis $MUC_{15.n}$) gebildet wird, von denen jedes einen der genannten Haltespeicher ($HM_{3.1}$ bis $HM_{3.n}$) und einen der genannten Zeitschlitzzähler ($T\text{-}CTR_{3.1}$ bis $T\text{-}CTR_{3.n}$) umfaßt, und in dem in jedem der genannten Schaltungsmoduln von jedem Raumschalter:

die Speichereinheit (MEM) fähig ist, eine vorbestimmte Anzahl von m-Bit-Wörtern zu speichern;
die Adresseneingabeeinrichtung einen Adressenpuffer (AB) umfaßt, der Adressenanschlußeinrichtungen (TRA) hat;
der Zeitschlitzzähler (T-CTR) fähig ist, m-Zeitschlitze vorwärts zu zählen;
der Adressenselektor (AS) verbunden ist mit dem Adressenpuffer (AB), mit dem Zeitschlitzzähler (T-CTR) und der Speichereinheit (MEM), um eines der ersten und zweiten Adressensignale auszuwählen und es an die Speichereinheit zu übertragen;
die Adressenauswahlmodem-Schalteinrichtungen ($M_0$) mit dem Adressenselektor verbunden sind, um den Auswahlmodus des Adressenselektors zu steuern;
die Dateneingabeeinrichtung einen ersten Datenpuffer (IB) umfaßt, der mit der Speichereinheit verbunden ist und Eingangsanschlußeinrichtungen (DI) umfaßt; und
die Datenausgabeeinrichtung einen Ausgangsdatenpuffer (OB) umfaßt, der mit der genannten Speichereinheit verbunden ist und Ausgangsanschlußeinrichtungen (DO) umfaßt;
und bei dem in jedem der genannten Raumschalter die Ausgangsanschlußeinrichtungen (DO) der genannten Schaltungsmoduln mit dem genannten Torabschnitt verbunden sind, die Adressenauswahlmoden-Schalteinrichtungen ($M_0$) von jedem der Schaltungsmoduln so gesteuert werden, daß der Adressenselektor (AS) von jedem der Schaltungsmoduln das genannte erste Adressensignal in einem Schreibzyklus auswählt und das genannte zweite Adressensignal in einem Lesezyklus auswählt, und die Schreibfreigabeschalteinrichtungen $(M_1)$ von jedem der Schaltungsmoduln so gesteuert werden, daß sie das genannte Schreibfreigabesignal nur bei Empfang eines Steuersignals (C) in einem Schreibzyklus erzeugen.

9. System nach Anspruch 6, bei dem jeder der ersten und zweiten Schaltungsmoduln $(MUC_{21}, MUC_{22})$ ferner umfaßt:

Konversionsschaltungen (SP/PS) zur Durchführung sowohl der seriell-zu-parallel-Konversion als auch der parallel-zu-seriell-Konversion;

Routenauswahleinrichtungen $(SEL_1$ bis $SEL_3)$, die mit der genannten Konversionsschaltung und der genannten Dateneingabeeinrichtung und der genannten Datenausgabeeinrichtung und der genannten Speichereinheit (MEM) des Moduls verbunden sind; und

Routenselektionsmodenschalteinrichtungen $(M_3)$, die mit den genannten Routenauswahleinrichtungen verbunden sind, zur Steuerung der genannten Routenauswahleinrichtungen;

die genannten Routenauswahlmodenschalteinrichtungen in dem genannten ersten Schaltungsmodul $(MUC_{21})$ die genannten Routenauswahleinrichtungen so steuern, daß die genannte Konversionsschaltung (SP/PS) darin in Reihe mit der genannten Dateneingabeeinrichtung verbunden ist, und die genannten Routenselektionsmodenschalteinrichtungen in dem genannten zweiten Schaltungsmodul $(MUC_{22})$ die Routenauswahleinrichtungen so steuern, daß die genannte Konversionsschaltung. darin nicht den Betrieb von jenem Schaltungsmodul beeinflußt.

10. System nach Anspruch 7, bei dem jeder der ersten und zweiten Schaltungsmoduln $(MUC_{22}, MUC_{24})$ in jedem sekundären Zeitschalter ferner umfaßt:

Konversionsschaltungen (SP/PS) für die seriell-zu-parallel-Konversion und die parallel-zu-seriell-Konversion;

Routenauswahleinrichtungen $(SEL_1$ bis $SEL_3)$ die mit der genannten Konversionsschaltung und der genannten Dateneingabeeinrichtung und der genannten Datenausgabeeinrichtung und der genannten Speichereinheit (MEM) verbunden sind; und

Routenselektionsmodenschalteinrichtungen $(M_3)$, die mit den genannten Routenauswahleinrichtungen verbunden sind, um die genannten Routenauswahlein- richtungen zu steuern;

und bei dem in jedem sekundären Zeitschalter die genannten Routenauswahlmodenschalteinrichtungen in dem ersten Schaltungsmodul $(MUC_{23})$ die genannten Routenauswahleinrichtungen so steuern, daß die genannte Konversionsschaltung darin in Reihe mit der genannten Datenausgabeeinrichtung verbunden ist, und die Routenauswahlmodenschalteinrichtungen in dem zweiten Schaltungsmodul $(MUC_{24})$ die genannten Routenauswahleinrichtungen so steuern, daß die genannte Konversionsschaltung darin den Betrieb von dem Schaltungsmodul nicht beeinflußt.

**Revendications**

1. Module de circuit destiné à un système de commutation numérique à division temporelle, comportant: une unité de mémoire (MEM); un sélecteur d'adresse (AS) connecté à l'unité de mémoire pour lui transmettre des signaux d'adresse; un dispositif d'entrée d'adresse (TRA, AB) par lequel des premiers signaux d'adresse fournis extérieurement peuvent être passés au sélecteur d'adresse; un compteur (T-CTR) connecté au sélecteur d'adresse pour produire des seconds signaux d'adresse; un dispositif de commutation de mode de sélection d'adresse $(M_0)$ pouvant être commuté sélectivement par un premier signal de mise en place appliqué par l'extérieur de manière que ledit sélecteur d'adresse transmette soit lesdits premiers signaux d'adresse, soit lesdits seconds signaux d'adresse suivant qu'un signal d'autorisation d'écriture est appliqué ou non à l'unité de mémoire; un dispositif de commutation d'autorisation d'écriture $(M_1)$ connecté à l'unité de mémoire pour lui appliquer des signaux d'autorisation d'écriture; un dispositif d'entrée de données destiné à transmettre à ladite unité de mémoire des données fournies par l'extérieur; et un dispositif de sortie de données destiné à délivrer des données provenant de ladite unité de mémoire à un circuit extérieur; caractérisé en ce que ledit dispositif de commutation d'autorisation d'écriture $(M_1)$ peut être commuté sélectivement par un second signal de mise en place appliqué par l'extérieur, soit dans un premier mode dans lequel un signal d'autorisation d'écriture (WE) est appliqué à l'unité de mémoire dans un cycle d'écriture du module lors-qu'un signal de commande (C) prédéterminé est appliqué à une entrée de commande extérieure (TCTL) du dispositif de commutation d'autorisation d'écriture, soit dans un second mode dans lequel un signal d'autorisation d'écriture est appliqué à l'unité de mémoire dans un cycle d'écriture indépendamment du fait que ce signal de commande soit appliqué à l'entrée de commande extérieure (TCTL), le dispositif de commutation d'autorisation d'écriture comportant une autre entrée pour recevoir un signal de définition de cycle d'écriture/lecture quand le module est en cours d'utilisation.

2. Module de circuit selon la revendication 1, comportant un tampon de données d'entrée/sortie (IB') qui comporte ledit dispositif d'entrée de données, et comprenant en outre un dispositif de commutation de mode de lecture de maintenance $(MR_1)$ avec une borne (TMR) et étant connecté audit tampon de données d'entrée/sortie et à ladite unité de mémoire (MEM) pour transmettre des données lues dans ladite unité de mémoire vers le tampon de données d'entrée/sortie à l'application d'un signal de commande à ladite borne (TMR).

3. Module de circuit selon la revendication 1, comportant en outre un circuit de mode de lecture de maintenance (MR₂) connecté à ladite unité de mémoire (MEM); et un circuit de contrôle de données (CHK) connecté audit dispositif d'entrée de données et audit circuit de mode de lecture de maintenance, pour comparer des données de sortie provenant dudit circuit de mode de lecture de maintenance avec la sortie dudit dispositif d'entrée de données de manière à produire un signal de coïncidence en fonction du résultat de la comparaison.

4. Module de circuit selon l'une quelconque des revendication 8 précédentes, comportant en outre un générateur de bits de parité (PG) connecté audit dispositif d'entrée de données et à ladite unité de mémoire (MEM) pour produire un bit de contrôle de parité (PB) des données de sortie dudit dispositif d'entrée de données et pour le transmettre à ladite unité de mémoire; et un circuit de contrôle de bits de parité (PC) connecté audit dispositif de sortie de données pour effectuer une opération de contrôle de parité sur les données de sortie dudit dispositif de données.

5. Système de commutation numérique à division temporelle comportant des commutateurs primaires temporels (PTSW), un commutateur spatial (SSW) et des commutateurs secondaires temporels (STSW), chaque commutateur primaire temporel comportant une mémoire de circuit primaire de conversation (SPM₁) et un dispositif de production de signaux d'adresse et une mémoire de maintien (HM₁) pour mémoriser et délivrer des signaux d'adresse à la mémoire de circuit primaire de conversation, le commutateur spatial comportant des commutateurs à portes (G) et des mémoires de maintien (HM) pour commander les commutateurs à portes, et chaque commutateur secondaire temporel (STSW) comprenant une mémoire de circuit secondaire de conversation (SPM₂) et un dispositif générateur de signaux d'adresse et une mémoire de maintien (HM₂) pour mémoriser et délivrer des signaux d'adresse à la mémoire de circuit secondaire de conversation, caractérisé en ce que les mémoires de circuit de conversation et les mémoires de maintien sont réalisés par des modules de circuits respectifs (MUC) dont chacun est un module selon l'une quelconque des revendications précédentes.

6. Système selon la revendication 5, dans lequel chacun des commutateurs primaires temporels (PTSW) est constitué par un premier module de circuit (MUC₁₁, MUC₂₁) qui comporte ladite mémoire de circuit primaire de conversation (SPM₁) et ledit dispositif générateur de signaux d'adresse du commutateur primaire temporel (PTSW) et un second module de circuit (MUC₁₂, MUC₂₂) qui comporte ladite mémoire de maintien (HM₁) du commutateur primaire temporel; et dans lequel, dans chacun dudit premier et dudit second module de circuit: l'unité de mémoire (MEM) est capable de mémoriser un nombre prédéterminé de mots à m bits; le dispositif d'entrée d'adresse comporte un tampon d'adresse (AB) avec une borne d'adresse (TRA); le compteur (T-CTR) a pour fonction de compter jusqu'à m intervalles de temps; le sélecteur d'adresse (AS) est connecté au tampon d'adresse (AB), au compteur (T-CTR) et à l'unite de mémoire (MEM) pour sélectionner l'un desdits premiers et desdits seconds signaux d'adresse et pour le transmettre à l'unité de mémoire (MEM); le dispositif de commutation de mode de sélection d'adresse (M₀) est connecté au sélecteur d'adresse (AS) pour commander le mode de sélection du sélecteur d'adresse; le dispositif d'entrée de données comporte un tampon de données d'entrée (IB) connecté à l'unité de mémoire (MEM) et comprenant une borne d'entrée (DI); et le dispositif de sortie de données comporte un tampon de données de sortie connecté à ladite unité de mémoire (MEM) et avec une borne de sortie (DO); et dans lequel, dans chacun desdits commutateurs primaires temporels (PTSW), ladite borne de sortie (DO) du second module de sortie est connectée à la borne d'adresse (TRA) du premier module de circuit, le dispositif de commutation de mode de sélection d'adresse (M₀) du premier et du second module de circuit est commandé de manière que le sélecteur d'adresse (AS) de chacun des premiers et des seconds modules de circuit sélectionne ledit premier signal d'adresse dans un cycle d'écriture et sélectionne ledit second signal d'adresse dans un cycle de lecture, le dispositif de commutation d'autorisation d'écriture (M₁) du premier module de circuit étant commandé de manière à produire ledit signal d'autorisation d'écriture dans chaque cycle d'écriture et le dispositif de commutation d'autorisation d'écriture (M₁) du second module de circuit étant commandé pour produire le signal d'autorisation, seulement à la réception d'un signal de commande (C) dans un cycle d'écriture.

7. Système selon la revendication 5 ou 6, dans lequel chacun desdits commutateurs secondaires temporels (STSW) est constitué par un premier module de circuit (MUC₁₃, MUC₂₃) qui comporte ladite mémoire de circuit secondaire de conversation (SPM₂) et le dispositif générateur de signaux d'adresse du commutateur secondaire temporel (STSW) et un second module de circuit (MUC₁₄, MUC₂₄) qui comporte ladite mémoire de maintien (HM₂) du commutateur secondaire temporel; et dans lequel, dans chacun dudit premier et dudit second modules de circuit de chaque commutateur secondaire temporel: l'unité de mémoire (MEM) est capable de mémoriser un nombre prédéterminé de mots à m bits; le dispositif d'entrée d'adresse comporte un tampon d'adresse (AB) avec une borne d'adresse (TRA); le compteur (T-CTR) a pour fonction de compter jusqu'à m intervalles de temps; le sélecteur d'adresse (AS) est connecté au tampon d'adresse (AB), au compteur (T-CTR) et à l'unité de mémoire (MEM) pour sélectionner l'un desdits premiers et seconds signaux d'adresse et pour le transmettre à l'unité de mémoire; le dispositifs de commutation de mode de sélection d'adresse

($M_0$) est connecté au sélecteur d'adresse (AS) pour commander le mode de sélection du sélecteur d'adresse; le dispositif d'entrée de données comporte un tampon de données d'entrée (IB) connecté à l'unité de mémoire (MEM) et comprenant une borne d'entrée (DI); et le dispositif de sortie de données comprenant un tampon (OB) de données de sortie connecté à l'unité de mémoire (MEM) et avec une borne de sortie (DO); et dans lequel, dans chacun desdits commutateurs secondaires temporels, ladite borne de sortie (DO) du second module de circuit est connectée à la borne d'adresse (TRA) du premier module de circuit, le dispositif de commutation de mode de sélection d'adresse ($M_0$) du premier module de circuit est commandé de manière que le sélecteur d'adresse (AS) du premier module de circuit sélectionne ledit second signal d'adresse dans un cycle d'écriture et sélectionne ledit premier signal d'adresse dans un cycle de lecture, le dispositif de commutation d'autorisation d'écriture ($M_1$) du premier module de circuit est commandé de manière à produire ledit signal d'autorisation d'écriture dans chaque cycle d'écriture, la dispositif de commutation de mode de sélection d'adresse ($M_0$) du second module de circuit est commandé de manière que le sélecteur d'adresse (AS) du second module de circuit sélectionne ledit premier signal d'adresse dans un cycle d'écriture et sélectionne ledit second signal d'adresse dans un cycle de lecture, et le dispositif de commutation d'autorisation d'écriture ($M_1$) du second module de circuit est commandé de manière à produire ledit signal d'autorisation d'écriture, seulement à la réception d'un signal de commande (C) dans un cycle d'écriture.

8. Système selon la revendication 5, 6 ou 7, dans lequel chaque commutateur spatial (SSW) comporte une partie de portes (G) avec des commutateurs à portes, plusieurs mémoires de maintien ($HM_{3.1}$ à $HM_{3.n}$) destinées chacune à produire un signal de sélection pour indiquer l'un desdits commutateurs à portes et plusieurs compteurs d'intervalles de temps ($T\text{-}CTR_{3.1}$ à $T\text{-}CTR_{3.n}$) destiné chacun à produire une adresse de lecture pour lesdites mémoires de maintien, et constituées par plusieurs modules de circuit ($MUC_{15.1}$ à $MUC_{15.n}$) comprenant chacune l'une desdites mémoires de maintien ($HM_{3.1}$ à $HM_{3.n}$) et l'un desdits compteurs d'intervalles de temps ($T\text{-}CTR_{3.1}$ à $T\text{-}CTR_{3.n}$) et dans lequel dans chacun desdits modules de circuit de chaque commutateur spatial: l'unité de mémoire (MEM) peut mémoriser un nombre prédétermine de mots à m bits; le dispositif d'entrée d'adresse comporte un tampon d'adresse (AB) avec une borne d'adresse (TRA); le compteur d'intervalles de temps (T-CTR) a pour fonction de compter jusqu'à m intervalles de temps; le sélecteur d'adresse (AS) est connecté au tampon d'adresse (AB) au compteur d'intervalles de temps (T-CTR) et à l'unité de mémoire (MEM) pour sélectionner l'un desdits premiers et seconds signaux d'adresse et pour le transmettre à l'unité de

mémoire; le dispositif ($M_0$) de commutation de mode de sélection d'adresse est connecté au sélecteur d'adresse pour commander le mode de sélection du sélecteur d'adresse; le dispositif d'entrée de données comporte un tampon de données d'entrée (IB) connecté à l'unité de mémoire et avec une borne d'entrée (DI); et le dispositif de sortie de données comporte un tampon de données de sortie (OB) connecté à ladite unité de mémoire et avec une borne de sortie (DO); et dans lequel, dans chacun desdits commutateurs spatiaux, la borne de sortie (DO) desdits modules de circuit est connectée à ladite partie de portes, le dispositif ($M_0$) de commutation de mode de sélection d'adresse de chaque module de circuit est commandée de manière que le sélecteur d'adresse (AS) de chaque module de circuit sélectionne ledit premier signal d'adresse dans un cycle d'écriture et sélectionne ledit second signal d'adresse dans un cycle de lecture et ledit dispositif de commutation d'autorisation d'écriture ($M_1$) de chacun des modules de circuit est commandé de manière à produire ledit signal d'autorisation d'écriture, seulement à la réception d'un signal de commande (C) dans un cycle d'écriture.

9. Système selon la revendication 6, dans lequel chacun dudit premier et dudit second modules de circuit ($MUC_{21}$, $MUC_{22}$) comporte en outre: un circuit de conversion (SP/PS) destiné à effectuer à la fois une conversion série-parallèle et une conversion parallèle-série; un dispositif de sélection d'itinéraire ($SEL_1$ à $SEL_3$) interconnecté avec ledit circuit de conversion et ledit dispositif d'entrée de données et ledit dispositif de sortie de données et ladite unité de mémoire (MEM) du module; et un dispositif de commutation de mode de sélection d'itinéraire ($M_3$) connecté audit dispositif de sélection d'itinéraire pour commander ledit dispositif de sélection d'itinefaire; ledit dispositif de commutation de mode de sélection d'itinéraire dans ledit premier module de circuit ($MUC_{21}$) commandant ledit dispositif de sélection d'itinéraire de manière que son circuit de conversion (SP/PS) soit connecté en série avec ledit dispositif d'entrée de données et ledit dispositif de commutation de mode de sélection d'itinéraire dans ledit second module de circuit ($MUC_{22}$) commandant ledit dispositif de sélection d'itinéraire de manière que son circuit de conversion n'affecte pas le fonctionnement de ce module de circuit.

10. Système selon la revendication 7, dans lequel chacun dudit premier et dudit second modules de circuit ($MUC_{23}$, $MUC_{24}$) dans chaque commutateur secondaire temporel comporte en outre: un circuit de conversion (SP/PS) pour la conversion série-parallèle et la conversion parallèle-série; un dispositif de sélection d'itinéraire ($SEL_1$ à $SEL_3$) interconnecté avec ledit circuit de conversion et ledit dispositif d'entrée de données et ledit dispositif de sortie de données et ladite unité de mémoire (MEM); et un dispositif de commutation de mode de sélection d'itinéraire ($M_3$) connecté audit dispositif de sélection d'itinéraire pour commander ledit dispositif de sélection d'itinéraire; et dans lequel, dans chaque commutateur secondaire temporel, ledit dispositif de commutation de mode de sélection d'itinéraire dans le premier module de circuit (MUC$_{23}$) commande ledit dispositif de sélection d'itinéraire de manière que ledit circuit de conversion soit connecté en série avec ledit dispositif de sortie de données et ledit dispositif de commutation de mode de sélection d'itinéraire dans le second module de circuit (MUC$_{24}$) commande ledit dispositif de sélection d'itinéraire de manière que ledit circuit de conversion n'affecte pas le fonctionnement de ce module de circuit.

*Fig. 1A*

*Fig. 1*

| *Fig. 1A* | *Fig. 1B* |
|-----------|-----------|

0 086 634

Fig. IB

Fig. 2

PRIOR ART

SP$_i$

8bits

IHW$_{i\cdot 1}$

IHW$_{i\cdot 2}$

IHW$_{i\cdot \ell}$

SERIAL TO PARALLEL CONVERSION

PTSW$_i$

SPM$_i$

UM$_{i\cdot 0}$ (1Xm)

UM$_{i\cdot 1}$ (1Xm)

UM$_{i\cdot 7}$ (1Xm)

SSW

AS$_i$

WE    RA

WA

UM$_{2\cdot 0}$ (1Xm)   UM$_{2\cdot 1}$ (1Xm)   UM$_{2\cdot k-1}$ (1Xm)

TIME SLOT COUNTER

T-CTR$_i$

AS$_2$

HM$_i$

AD    ADD

CPR

STSW₁

8 bits

SPM₂

PS₁

SSW

UM ₁₋₀ (l X m)

UM ₁₋₁ (l X m)

UM ₁₋₇ (l X m)

AS₁

WE  WA  RA

PARALLEL TO SERIAL CONVERSION

OHW₁₋₁

OHW₁₋₂

OHW₁₋ℓ

*Fig. 3*

PRIOR ART

HM₂

TIME SLOT COUNTER

T-CTR₂

AS₂

UM ₂₋₁ (l X m)

UM ₂₋ℓ (l X m)

UM ₂₋ₖ₋₁

AD

ADD

CPR

0 086 634

4

Fig. 4 PRIOR ART

## Fig. 5

# Fig. 6

# Fig. 7

# Fig. 8

Fig. 9

## Fig. 10

0 086 634

# Fig. 11

0 086 634

## Fig. 12

## Fig. 13

Fig. 14